# EUROPÄISCHE PATENTSCHRIFT

(11) **EP 2 606 101 B1**
(45) Veröffentlichungstag und Bekanntmachung des Hinweises auf die Patenterteilung: **08.06.2016**
(21) Anmeldenummer: 11748568.0
(22) Anmeldetag: 21.07.2011
(51) Int. Cl.: C09K 19/52, C09K 19/54, C09K 19/42, C09K 19/44, G02F 1/1343, C09K 19/56, C09K 19/04, C09K 19/30, C09K 19/12

(54) **FLÜSSIGKRISTALLINES MEDIUM UND FLÜSSIGKRISTALLANZEIGEN**
LIQUID CRYSTAL MEDIUM AND LIQUID CRYSTAL DISPLAYS
MILIEU LIQUIDE CRISTALLIN ET ÉCRANS À BASE DE CRISTAUX LIQUIDES

(30) Priorität: 19.08.2010 DE 102010034747
(43) Veröffentlichungstag der Anmeldung: 26.06.2013
(73) Patentinhaber: Merck Patent GmbH, 64293 Darmstadt (DE)
(72) Erfinder: ARCHETTI, Graziano, 64289 Darmstadt (DE); CZANTA, Markus, 64287 Darmstadt (DE)
(86) Internationale Anmeldenummer: PCT/EP2011/003664
(87) Internationale Veröffentlichungsnummer: WO 2012/022417

(56) Entgegenhaltungen:
- WO-A1-2010/089092
- US-A1- 2005 224 754
- US-A1- 2008 198 301

## Beschreibung

Die vorliegende Erfindung betrifft flüssigkristalline Medien und diese enthaltende Flüssigkristallanzeigen (FK-Anzeigen) mit homöotroper (vertikaler) Ausrichtung des flüssigkristallinen Mediums (FK-Medium). Das erfindungsgemäße FK-Medium mit positiver dielektrischer Anisotropie enthält Teilchen mit einer Masse von mindestens 450 Da, die durch eine polare, organische Ankergruppe funktionalisiert sind (wie nachstehend und in den Ansprüchen näher beschrieben). Vorzugsweise wird es durch eine polymerisierbare Komponente stabilisiert.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned).

Anzeigen, die den ECB-Effekt verwenden, haben sich als sogenannte VAN-(Vertically Aligned Nematic) Anzeigen beispielsweise in den Bauformen

MVA (Multi-Domain Vertical Alignment, z.B.: Yoshide, H. et al., Vortrag 3.1: "MVA LCD for Notebook or Mobile PCs...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS (In Plane Switching) (z.B.: Yeo, S.D., Vortrag 15.3: "A LC Display for the TV Application", SID 2004 International Symposium, Digest of Technical Papers, XXXV, Buch II, S. 758 & 759) und den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, lan, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

VA-Anzeigen die FK-Medien mit positiver dielektrischer Anisotropie enthalten, werden in S.H. Lee et al. Appl. Phys. Lett. (1997), 71, 2851-2853 beschrieben. Diese Anzeigen verwenden auf eine Substratoberfläche angeordnete Interdigitalelektroden (In-plane Ansteuerelektroden-Konfiguration kammförmiger Struktur), wie sie unter anderem bei den kommerziell erhältlichen IPS-(in-plane switching) Anzeigen zum Einsatz kommen (wie z.B. in DE 40 00 451 und EP 0 588 568 offenbart), und weisen eine homöotrope Anordnung des Flüssigkristallmediums auf, die zu einer planaren Anordnung beim Anlegen einer elektrischen Feldes wechselt.

Weiterentwicklungen der obengenannte Anzeige sind zum Beispiel in K.S. Hun et al. J. Appl. Phys. (2008), 104, 084515 (DSIPS: 'double-side in-plane switching' für Verbesserungen von Treiberspannung und Transmission), M. Jiao et al. App. Phys. Lett (2008), 92, 111101 (DFFS: 'dual fringe field switching' für verbesserte Schaltzeiten) und Y.T. Kim et al. Jap. J. App. Phys. (2009), 48, 110205 (VAS: 'viewing angle switchable' LCD) zu finden. Darüberhinaus sind VA-IPS-Anzeigen auch unter dem Namen Positiv-VA und HT-VA bekannt.

Bei allen solche Anzeigen (hier nachfolgend allgemein als VA-IPS-Anzeigen bezeichnet) ist auf beiden Substratoberflächen eine Orientierungsschicht zur homöotropen Ausrichtung des FK-Mediums aufgebracht, deren Erzeugung bisher mit einem beträchtlichen Aufwand verbunden ist.

Ein Ziel dieser Erfindung ist es, die Herstellprozesse selbst zu vereinfachen, ohne die Vorteile der VA-IPS-Technik, wie relativ schnelle Schaltzeiten, gute Blickwinkelabhängigkeit und hohen Kontrast aufzugeben.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft, den Materialien in den Substratoberflächen und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

VA-Anzeigen sollen im Allgemeinen einen sehr hohen spezifischen Widerstand bei gleichzeitig großem Arbeitstemperaturbereich, kurze Schaltzeiten und niedriger Schwellenspannung, mit deren Hilfe verschiedene Graustufen erzeugt werden können, besitzen.

In den herkömmlichen VA-IPS-Displays sorgt eine Polyimidschicht auf den Substratoberflächen für die homöotrope Orientierung des Flüssigkristalls. Die Herstellung einer geeigneten Orientierungsschicht im Display erfordert einen erheblichen Aufwand. Außerdem können Wechselwirkungen der Orientierungsschicht mit dem FK-Medium den elektrischen Widerstand der VA-IPS-Anzeige verschlechtern. Wegen solcher möglichen Wechselwirkungen reduziert sich die Zahl der geeigneten Flüssigkristallkomponenten erheblich. Daher wäre es erstrebenswert die homöotrope Ausrichtung des FK-Mediums ohne Polyimid zu erreichen. Dies würde gleichzeitig die Herstellprozesse der VA-IPS-Anzeige vereinfachen.

Der Nachteil der häufig verwendeten TN-Anzeigen (TN: 'twisted nematic') beruht in ihrem vergleichsweise niedrigen Kontrast, der relativ hohen Blickwinkel-abhängigkeit und der Schwierigkeit in diesen Anzeigen Graustufen zu erzeugen.

Wesentlich bessere Blickwinkelabhängigkeiten weisen IPS- und VA-Displays auf und werden daher hauptsächlich für Fernseher und Monitore verwendet.

Eine Weiterentwicklung stellen die sogenannten PS-bzw. PSA-Anzeigen ("Polymer Sustained" bzw. "Polymer Sustained Alignment") dar, für die auch gelegentlich der Begriff "Polymer Stabilized" verwendet wird. Ohne nennenswerte Einbußen sonstiger Parameter, wie insbesondere der günstigen Blickwinkelabhängigkeit des Kontrastes, zeichnen sich die PSA-Anzeigen durch die Verkürzung der Schaltzeiten aus.

In diesen Anzeigen wird dem FK-Medium eine geringe Menge (zum Beispiel 0,3 Gew.%, typischerweise <1 Gew.%) einer oder mehrerer polymerisierbarer Verbindung(en) zugesetzt, welche nach Einfüllen in die FK-Zelle mit oder ohne angelegte elektrische Spannung zwischen den Elektroden *in situ* polymerisiert bzw. vernetzt wird, üblicherweise durch UV-Photopolymerisation. Als besonders geeignet hat sich der Zusatz von polymerisierbaren mesogenen oder flüssigkristallinen Verbindungen, auch als reaktive Mesogene oder "RM"s bezeichnet, zur FK-Mischung erwiesen. Die PSA-Technik wird bisher hauptsächlich für FK-Medien mit negativer dielektrischer Anisotropie eingesetzt.

Nachfolgend wir der Begriff "PSA", falls nicht anders angegeben, stellvertretend für PS-Anzeigen und PSA-Anzeigen verwendet.

Mittlerweile wird das PSA-Prinzip in diversen klassischen FK-Anzeigen angewendet. So sind beispielsweise PSA-VA-, PSA-OCB-, PSA-IPS-, PSA-FFS- und PSA-TN-Anzeigen bekannt. Die Polymerisation der polymerisierbaren Verbindung(en) erfolgt bei PSA-VA- und PSA-OCB-Anzeigen vorzugsweise bei angelegter elektrischer Spannung, bei PSA-IPS-Anzeigen mit oder ohne angelegte elektrische Spannung. Wie man in Testzellen nachweisen kann, führt das PS(A)-Verfahren zu einem 'pretilt' in der Zelle. Bei PSA-OCB-Anzeigen beispielsweise kann man erreichen, dass die Bend-Struktur stabilisiert wird, so dass man ohne Offset-Spannung auskommt oder diese reduzieren kann.

PSA-VA-Anzeigen sind beispielsweise in JP 10-036847 A, EP 1 170 626 A2, US 6,861,107, US 7,169,449, US 2004/0191428 A1, US 2006/0066793 A1 und US 2006/0103804 A1 beschrieben. PSA-OCB-Anzeigen sind beispielsweise in T.-J- Chen et al., Jpn. J. Appl. Phys. 45, 2006, 2702-2704 und S. H. Kim, L.-C-Chien, Jpn. J. Appl. Phys. 43, 2004, 7643-7647 beschrieben. PSA-IPS-Anzeigen sind zum Beispiel in US 6,177,972 und Appl. Phys. Lett. 1999, 75(21), 3264 beschrieben. PSA-TN-Anzeigen sind zum Beispiel in Optics Express 2004, 12(7), 1221 beschrieben. PSA-VA-IPS Anzeigen (polymerstabilisierte VA-Zelle mit Interdigitalelektroden und positiv dielektrischem Medium) sind zum Beispiel in WO 2010/089092 A1 beschrieben

PSA-Anzeigen können ebenso wie die oben beschriebenen konventionellen FK-Anzeigen als Aktivmatrix- oder Passivmatrix-Anzeigen betrieben werden. Bei Aktivmatrix-Anzeigen erfolgt die Ansteuerung einzelner Bildpunkte üblicherweise durch integrierte, nicht-lineare aktive Elemente wie beispielsweise Transistoren (z.B. Dünnfilmtransistoren, engl. "thin film transistor" bzw. "TFT"), bei Passivmatrix-Anzeigen üblicherweise nach dem Multiplex-Verfahren, wobei beide Verfahren aus dem Stand der Technik bekannt sind.

Im Stand der Technik werden für PSA-VA beispielsweise polymerisierbare Verbindungen der folgenden Formel verwendet 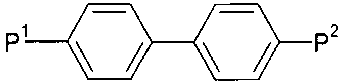 worin P eine polymerisierbare Gruppe, üblicherweise eine Acrylat- oder Methacrylatgruppe bedeutet, wie beispielsweise in US 7,169,449 beschrieben.

Der Aufwand für das Erzeugen einer Polyimidschicht, Behandlung der Schicht und Verbesserung mit Erhebungen oder Polymerschichten, ist relativ groß. Eine vereinfachende Technologie wäre daher wünschenswert, die einerseits die Produktionskosten verringert und andererseits die Bildqualität (Blickwinkelabhängigkeit, Kontrast, Schaltzeiten) zu optimieren hilft.

Über eine spontane horizontale bis vertikale Ausrichtung einer Flüssigkristallschicht mit Hilfe von Nanopartikeln basierend auf polyhedralen oligomeren Silsesquioxanen (nachfolgend einfach Silsesquioxane, PSS) berichtet die Druckschrift Shie-Chang Jeng et al. Optics Letters (2009), 34, 455-457. Ab einer Konzentration von ca. 1 Gew.-% wird eine nahezu homöotrope Ausrichtung beobachtet. Der'pretilt' ist nur durch die Konzentration beeinflussbar.

In der Druckschrift US 2008/0198301 A1 (US 7550094 B2) wird ebenfalls PSS als homöotropes Orientierungsmaterial für Flüssigkristallmedien vorgeschlagen. Eine Anwendung auf VA-IPS-Anzeigen wird nicht offenbart.

In der Druckschrift US 2005/224754 A1 wird eine polymerisierbare FK-Mischung als Ausgangsmaterial für Polymerfilme mit Organosiliziumverbindungen, die ein primäre Aminogruppe aufweisen, gemischt. Mit 10 % aminopropyl-substituiertem Silsesquioxan wird ein homeotropes Alignment des polymerisierten Films beobachtet.

Die Druckschrift JP 2010170090 A offenbart ein Dendrimer als Zusatz zu Flüssigkristallmischungen, das ein vertikale Ausrichtung gegenüber Substraten bewirkt.

Shug-June Hwang et al. J. Phys D: Appl. Phys 2009, 42, 025102 offenbaren aminsubstituiertes POSS (1 %) zur vertikalen Ausrichtung einer dielektrisch negativen Flüssigkristallmischung.

Auf das Problem der Temperaturabhängigkeit des Schaltvorgangs und der fehlenden Passivierungsschicht wird in diesen Druckschriften nicht hingewiesen. In der Tat hat es sich gezeigt, dass der Grad der von PSS induzierten homöotropen Orientierung mit steigender Temperatur rasch abnimmt. Eine Passivierungsschicht ist darüber hinaus besonders wichtig, da die Polyimidschicht nicht nur Orientierung der FK-Medium bietet sondern auch für elektrische Isolierung sorgt. Ohne Passivierungsschicht können Probleme mit der Zuverlässigkeit der Anzeige ('Reliability') wie R-DC ('Residual-DC') erscheinen.

Die bestehenden Ansätze um zu Displayanwendungen ohne Polyimidschicht zu gelangen sind daher noch nicht vollständig zufrieden stellend.

Ein Gegenstand der vorliegenden Erfindung ist ein FK-Medium enthaltend eine niedermolekulare flüssigkristalline Komponente mit einer positiven dielektrischen Anisotropie vom Wert Δε ≥ 1,5 und eine Komponente (N) enthaltend Teilchen mit einer Masse von mindestens 450 Da, wobei die Teilchen durch eine oder mehrere organische polare Ankergruppen funktionalisiert sind und die Ankergruppen ein oder mehrere Heteroatome ausgewählt aus den Elementen N, O, S und P umfassen.

Ein erfindungsgemäßes FK-Medium zeigt eine spontane homöotrope (vertikale) Ausrichtung gegenüber einer üblichen Substratoberfläche, wie z.B. einer Oberfläche aus Glas oder mit ITO oder Polyimid beschichtetem Glas.

Bevorzugt enthält das FK-Medium zusätzlich eine polymerisierte oder polymerisierbare Komponente, wobei die polymerisierte Komponente erhältlich ist durch Polymerisation einer polymerisierbaren Komponente.

Mit dieser Komponente lässt sich das FK-Medium und insbesondere seine Orientierung stabilisieren und gegebenenfalls ein gewünschter'pre-tilt' einstellen.

Ein weiterer Gegenstand der vorliegenden Erfindung ist ein Verfahren zur Herstellung eines FK-Mediums indem man eine niedermolekulare flüssigkristalline Komponente mit einer positiven dielektrischen Anisotropie vom Wert Δε ≥ 1,5 mit einer Komponente (N) wie vor und nachstehend beschrieben mischt und optional eine oder mehrere polymerisierbare Verbindungen und/oder Hilfsstoffe zugibt.

Ein weiterer Gegenstand der vorliegende Erfindung ist eine Flüssigkristallanzeige (FK-Anzeige) umfassend eine Flüssigkristallzelle (FK-Zelle) mit zwei Substraten und mindestens zwei Elektroden, wobei mindestens ein Substrat lichtdurchlässig ist und mindestens ein Substrat eine oder zwei, bevorzugt zwei, Elektroden aufweist, sowie einer zwischen den Substraten befindlichen Schicht eines Flüssigkristallmediums (FK-Mediums) enthaltend eine niedermolekulare flüssigkristalline Komponente mit einer positiven dielektrischen Anisotropie vom Wert Δε ≥ 1,5 und eine Komponente (N) wie vor und nachstehend definiert, die geeignet ist, eine homöotrope (vertikale) Ausrichtung des FK-Mediums gegenüber den Substratoberflächen herbeizuführen.

Bevorzugt enthält das FK-Medium der FK-Anzeige eine polymerisierte oder polymerisierbare Komponente, wobei die polymerisierte Komponente erhältlich ist durch Polymerisation einer oder mehrerer polymerisierbarer Verbindungen in dem FK-Medium zwischen den Substraten der FK-Zelle, optional unter Anlegen einer elektrischen Spannung an die Elektroden der Zelle.

Ein weiterer Gegenstand der Erfindung ist ein Verfahren zu Herstellung einer FK-Anzeige, vorzugsweise des PSA-VA-Typs, enthaltend eine FK-Zelle mit zwei Substraten und mindestens zwei Elektroden, wobei mindestens ein Substrat lichtdurchlässig ist und vorzugsweise mindestens ein Substrat eine oder zwei, bevorzugt zwei, Elektroden aufweist, umfassend die Verfahrensschritte:
- Befüllen der Zelle mit einem LC-Medium enthaltend ein FK-Medium wie vor und nachstehend oder in den Ansprüchen beschrieben, eine Komponente (N), die geeignet ist, eine homöotrope (vertikale) Ausrichtung des FK-Mediums gegenüber den Substratoberflächen herbeizuführen und optional eine polymerisierbare Komponente, und
- optional polymerisieren der polymerisierbaren Komponente, optional unter Anlegen einer Spannung an die Elektroden der Zelle oder unter der Wirkung eines elektrischen Feldes.

Die Komponente (N) wird im Flüssigkristall gelöst oder dispergiert. Sie bewirkt eine homöotrope Ausrichtung des Flüssigkristalls gegenüber den Substratoberflächen. Sie umfasst Teilchen mit einer Masse von mindestens 450 Da, wobei die Teilchen eine oder mehrere organische polare Ankergruppen umfassen, bevorzugt mit einem Anteil von 50, 75, 90 Gew.-% oder mehr, besonders bevorzugt besteht die Komponente (N) vollständig aus solchen Teilchen. Die Masse der Teilchen beträgt bevorzugt 600 Da oder mehr, und 2000 Da oder weniger. Die Komponente (N) sollte chemisch inert, alterungsbeständig und bevorzugt lipophil sein, um im Kontakt mit FK-Medien kompatibel und löslich oder dispergierbar zu sein. Geeignete Teilchen der Komponente (N) sind beispielsweise Silsesquioxanverbindungen mit einer polaren Ankergruppe, die sowohl als chemische Verbindungen als auch als Nanopartikel von ca. 1-5 nm Größe aufgefasst werden können. Alternativ kommen hier auch andere große Molekülreste als Teilchen zum Einsatz, die eine molekular definierte Struktur besitzen, und eine polare, organische Ankergruppe aufweisen. Beispiele für solche Reste sind z.B. funktionalisierte Fullerene, Varianten der Silsesquioxane, tetrasubstituierte Methanderivate und andere dreidimensionale molekulare Gerüste mit einer wie oben definierten Masse. Grundsätzlich können die Teilchen organische Moleküle sein oder organisch/anorganische Hybrid-Teilchen. Der anorganische Teil kann eine molekular definierte Struktur (z.B. PSS) aufweisen, oder eine Ansammlung von Atomen sein (Cluster, Metallnanopartikel, Nanokristalle, etc.).

Die Teilchen der Komponente (N) besitzen einen Durchmesser größer oder gleich 1 nm, vorzugsweise einen Durchmesser von 1 bis 5 nm. Es ist bevorzugt, dass die Teilchen der Komponente (N) ein Seitenverhältnis dₘₐₓ/dₘᵢₙ von höchstens 3:1, bevorzugt 2:1 oder weniger besitzen. Dabei bezeichnet dₘₐₓ die maximale Längenausdehnung und dₘᵢₙ die minimale Längenausdehnung eines nichtsphärischen Teilchens. Bei stäbchenförmigen Teilchen bezeichnet dₘₐₓ die Länge, und dₘᵢₙ die Breite bzw. den geringsten Durchmesser. Bei plättchenförmigen Teilchen bezeichnet dₘₐₓ den Durchmesser und dₘᵢₙ die Dicke. Die größte Längenausdehnung sollte bevorzugt 1 nm oder mehr betragen, bevorzugt sind 1-5 nm. Für Teilchen, deren Struktur nicht vollständig beschrieben werden kann, wird der mittlere Durchmesser verwendet in der Annahme, dass das Teilchen annähernd sphärisch ist. In diesem Fall ist der mittlere Durchmesser anstelle der größten Längenausdehnung anzusetzen. Gleiches gilt für statistische Größenverteilungen. Die Größenverhältnisse molekularer Strukturen lassen sich mit Hilfe von einfachen Modellen oder Berechungen der Molekülstruktur abschätzen, indem man gängige Bindungswinkel, Bindungslängen und Van-der-Waals-Radien der beteiligten Atome annimmt. Die Größe und Form von anderen nanopartikulären Stoffen lassen sich durch Streuungsmethoden in Lösung oder Transmissionselektronenmikroskopie (TEM) hinreichend genau bestimmen.

Die Teilchen der Komponente (N) werden vorzugsweise in einer Konzentration von weniger als 10 Gew.-%, besonders bevorzugt ≤ 8 Gew.-% und ganz besonders ≤ 5 Gew.-% eingesetzt. Sie werden bevorzugt in einer Konzentration von mindestens 0,1 Gew.-% eingesetzt, bevorzugt mindestens 0,2 Gew.-%. Der Einsatz von 0,1 bis 0,5 Gew.-% der Komponente (N) führt in der Regel schon zu vollständig homöotroper Orientierung der FK-Schicht bei den üblichen Zelldicken (3 bis 4 µm).

Die Ankergruppe der Komponente (N) besteht bevorzugt aus einer Gruppe, die eine nicht-kovalente Wechselwirkung mit der Substratoberfläche aus Glas oder Metalloxiden eingeht. Geeignete Gruppen sind polare Gruppen umfassend Gruppen mit Atomen ausgewählt aus N, O, S, und P, die vorzugsweise gleichzeitig gegenüber Luft und Wasser stabil sind. Bevorzugt sind ein oder mehrere, bevorzugt zwei oder mehr, dieser Heteroatome in der Ankergruppe enthalten.

Die Ankergruppe besteht bevorzugt aus ein bis zwei separaten Strukturelementen enthaltend Heteroatome, ausgewählt aus N und O, und kovalenten, verknüpfenden Strukturen zwischen den Strukturelementen und zwischen einem oder mehreren der Strukturelemente und dem Rest des Teilchens (= das Teilchen ohne die Ankergruppe). Diese kovalenten Strukturen bestehen aus kettenförmigen oder cyclischen aliphatischen Resten und/oder aromatischen Ringen, bevorzugt aus gesättigten Kohlenwasserstoffketten und/oder aliphatischen Ringen. Aliphatische Ringe umfassen z.B. Cyclohexan und Cyclopentan. Aromatische Ringe umfassen vorzugsweise Benzol, z.B. 1,4-, 1,3- oder 1,2-Phenylen.

Geeignete Ankergruppen umfassen daher neben einem Kohlenwasserstoffgerüst als Heteroatome N und O, wie beispielsweise in Strukturelementen wie -NH₂, -NH- (sekundäres Amin), tert-N (tertiäres Amin), =N-, -OH, -SH, -CN, -(CO)-, -O-, -S- und Kombinationen aus zwei oder mehreren dieser Gruppen. Bevorzugt sind dabei Gruppen, die mit den FK-Displays und dem FK-Medium kompatibel sind. Weniger bevorzugt sind in der Regel saure Gruppen wie -(CO)OH, -S(O)₂OH, -P(O)(OH)₂, etc., sowie ionische Gruppen. Eine bevorzugte Komponente (N) ist dadurch gekennzeichnet, dass die Verbindungen oder Partikel der Komponente (N) durch eine Ankergruppe umfassend mindestens eine, zwei oder mehr primäre oder sekundäre Amin-Funktionen (tert-N, -NH-, -NH₂), EtherGruppen (-O-) oder Hydroxygruppen (-OH) funktionalisiert sind. Bevorzugt sind es zwei oder mehr dieser Funktionen in einer Ankergruppe. Bevorzugt sind dabei zwei Heterofunktionen so zueinander angeordnet, dass sie eine Wechselwirkung mit einem Atom eines Bindungspartners nach Art eines zwei- oder mehrzähnigen Chelat-Liganden aufnehmen können. In einem einfachen, beispielhaften Fall entspricht die Art und Stellung der Aminofunktionen denen eines Ethylendiamins (-NH-CH₂CH₂-NH₂).

Teilchen der Komponente (N) haben in einer bevorzugten Ausführungsform die allgemeine Formel

O-A*

worin
A*die polare Ankergruppe bedeutet, und
O für das restliche Teilchen ohne die Ankergruppe steht. Das restliche Teilchen O bestimmt im Wesentlichen die Größe des Teilchens und in der Regel den Hauptanteil (≥90 %) der Masse.

Die Ankergruppe A* bedeutet bevorzugt eine Gruppe der Formel

-Sp-[X²-Z²-]ₖX¹ (A1)

worin jeweils unabhängig
- Sp: eine Einfachbindung oder eine Abstandsgruppe über die eine Verbindung zum Teilchen hergestellt wird, definiert wie Sp^{a} wie nachstehend für Formel I definiert, bevorzugt eine Abstandsgruppe -Sp"-X"- wie für Formel I unten definiert, die über die Gruppe X" mit dem Teilchen verbunden ist, wobei Sp" ganz besonders eine Einfachbindung, oder ein Alkylen mit 1 bis 12 C-Atomen bedeutet,
- X¹: eine Gruppe -NH₂, -NHR¹ -NR¹₂, -CN, -OR¹, -OH, -(CO)OH, oder eine Gruppe der Formeln 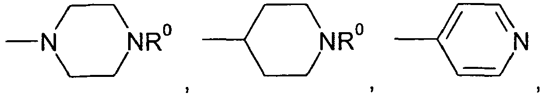
oder 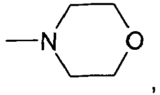
- R⁰: H oder Alkyl mit 1 bis 12 C-Atomen,
- X²: jeweils unabhängig -NH-, -NR¹-, -O- oder eine Einfachbindung
- Z²: jeweils unabhängig eine Alkylengruppe mit 1-15 C-Atomen, carbocyclische Ringe mit 5 oder 6 C-Atomen (z.B. optional substituiertes Benzol, Cyclohexan), oder Kombinationen aus einem oder mehreren Ringen und Alkylengruppen, worin jeweils optional ein oder mehrere Wasserstoffatome durch -OH, OR¹,-NH₂, -NHR¹-, -NR¹₂, oder Halogen (bevorzugt F, Cl) ersetzt sind,
- R¹: jeweils unabhängig einen halogenierten oder unsubstituierten Alkylrest mit 1 bis 15 C-Atomen, wobei in diesem Rest auch eine oder mehrere CH₂-Gruppen jeweils unabhängig voneinander durch -C≡C-, -CH=CH-, -(CO)O-, -O(CO)-, -(CO)- oder -O- so ersetzt sein können, dass O-und N-Atome nicht direkt miteinander verknüpft sind, und wobei die Gruppen R¹ optional miteinander zu Ringsystemen verknüpft sein können, und
- k: 0 bis 3
bedeutet. Im Speziellen besteht die Ankergruppe aus diesem Rest und bedeutet A*.

Besonders bevorzugt umfasst die Ankergruppe der Komponente (N) einen (N/O)-heteroatomhaltigen Rest der Teilformel (A2) 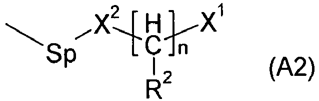 worin Sp, X¹, X² und R¹ wie oben für Formel (A1) definiert sind, und
- R²: H, F, Cl, CN, -OH, -NH₂, oder einen halogenierten oder unsubstituierten Alkylrest mit 1 bis 15 C-Atomen, wobei in diesem Rest auch eine oder mehrere CH₂-Gruppen jeweils unabhängig voneinander durch -C≡C-, -CH=CH-, -(CO)O-, -O(CO)-, -(CO)-, -O-, -NH-, oder -NR¹- so ersetzt sein können, dass O- und N-Atome nicht direkt miteinander verknüpft sind, und
- n: 1, 2 oder 3,
bedeutet. Im Speziellen besteht die Ankergruppe aus diesem Rest und bedeutet A*.

Besonders bevorzugte stickstoffhaltige Ankergruppen A* sind ausgewählt aus
-NH₂, -NH-(CH₂)ₙ₃H, -(CH₂)ₙ-NH₂, -(CH₂)ₙ-NH-(CH₂)ₙ₃H, -NH-(CH₂)ₙ-NH₂, -NH-(CH₂)ₙ-NH-(CH₂)ₙ₃H, -(CH₂)ₙ₁-NH-(CH₂)ₙ₂-NH₂, -(CH₂)ₙ₁-NH-(CH₂)ₙ₂-NH-(CH₂)ₙ₃H, -O-(CH₂)n-NH₂, -(CH₂)ₙ₁-O-(CH₂)ₙ-NH₂, -(CH₂)ₙ₁-NH-(CH₂)ₙ₂-OH, -O-(CH₂)ₙ₁-NH-(CH₂)ₙ₂-NH₂, -O-(CH₂)ₙ₁-NH-(CH₂)ₙ₂-OH, -(CH₂)ₙ₁-NH-(CH₂)ₙ₂-NH-(CH₂)ₙ₃H,
worin n, n1, n2 und n3 unabhängig 1, 2, 3, 4, 5, 6, 7, 8, 9, 10, 11 oder 12, insbesondere 1, 2, 3 oder 4 bedeuten. Die mehrfach mit Heteroatomen (N, O) ausgestatteten Gruppen besitzen eine besondere Stärke als Ankergruppe. Sie können in kleineren Konzentrationen eingesetzt werden. Besonders bevorzugte stickstofffreie Ankergruppen A* sind ausgewählt aus
-OH, -(CH₂)ₙ-OH, -O-(CH₂)ₙ-OH, -[O-(CH₂)ₙ₁-]ₙ₂-OH, -(CO)OH, -(CH₂)ₙ-(CO)OH, -O-(CH₂)ₙ-(CO)OH oder -[O-(CH₂)ₙ₁-]ₙ₂-(CO)OH, worin n, n1 und n2 unabhängig 1, 2, 3, 4, 5, 6, 7, 8, 9, 10, 11 oder 12, insbesondere 1, 2, 3 oder 4 bedeuten. Diese sind sehr gut kompatibel mit flüssigkristallinen Medien.

Die verwendeten Teilchen können untereinander gleich oder verschieden sein. Sie können sich entweder durch die molekulare Struktur unterscheiden oder durch eine statistische Massenverteilung eines Nanopartikels oder durch Isotopenverteilungen.

In der Regel besitzt ein Teilchen genau eine Ankergruppe. Mehrere Ankergruppen sind jedoch nicht ausgeschlossen. Bei Teilchen, die durch nachfolgende oder vorausgehende Polymerisation zusammenhängen, entstehen übergeordnete Teilchen, die mehrere Ankergruppen aufweisen. Beispiele dieser Art sind Dimere oder Oligomere von polyhedralen Silsesquioxanen, die an jeder PSS-Einheit durch eine Ankergruppe funktionalisiert sind. Der Zusammenschluss von mehreren PSS-Kernen erfolgt über die an die Ecken gebundenen organischen Reste. Der PSS-Kern kann auch aufgebrochen sein und selbst mehrere OH-Gruppen als Anker aufweisen (vgl. Struktur PSS-7 unten). Bevorzugte Teilchen der Komponente (N) besitzen ein polare Ankergruppe, sind aber an der Oberfläche des Teilchens durch Kohlenwasserstoffreste, bevorzugt durch unfunktionalisierte aliphatische Reste passiviert.

Bevorzugte Teilchen, die Silsesquioxane sind, haben die allgemeine Struktur PSS-0: 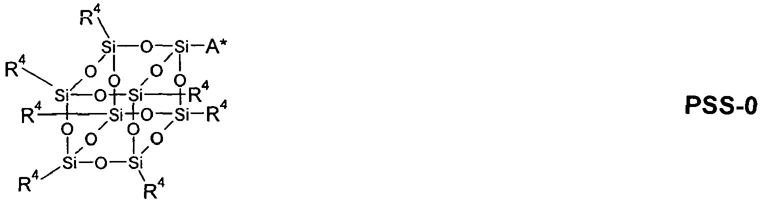 worin
- A*: eine Ankergruppe, wie vor- und nachstehend beschrieben, und
- R⁴: jeweils unabhängig einen optional halogenierten Kohlenwasserstoffrest, bevorzugt einen unfunktionalisierten oder halogenierten aliphatischen Rest, einen aromatischen Rest (insbesondere Benzolrest) oder Kombinationen davon, besonders bevorzugt einen Alkylrest oder einen Alkenylrest mit jeweils bis zu 15 C-Atomen, der optional durch Phenyl und/oder Halogen ein oder mehrfach substituiert ist,
bedeuten.

Besonders bevorzugte Teilchen als Komponente (N) sind ausgewählt aus den folgenden beispielhaften Verbindungen, welche bevorzugte Substituenten illustrieren:

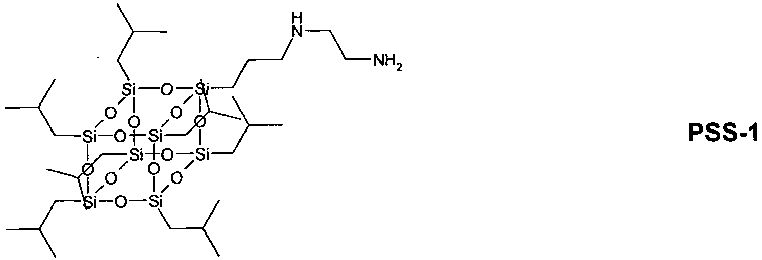

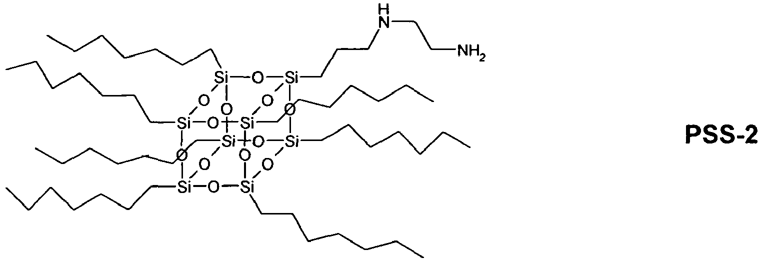

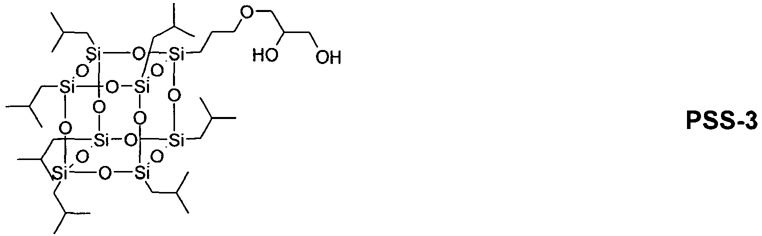

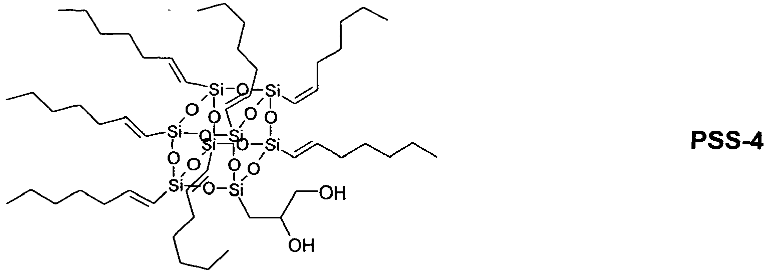

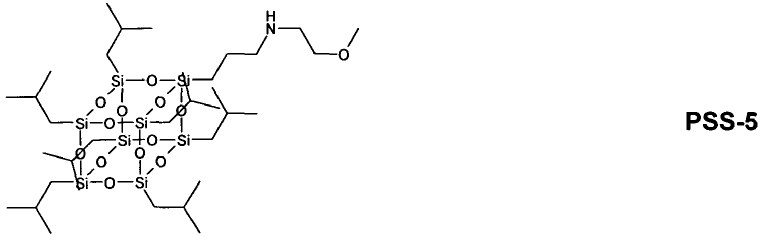

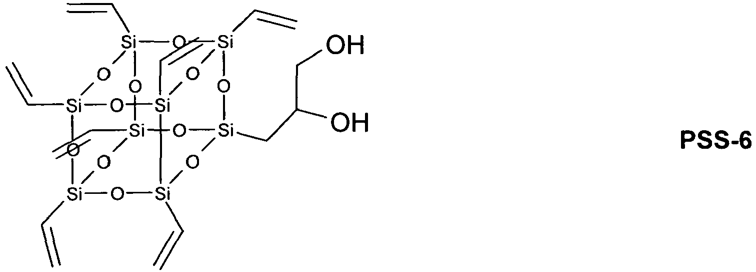

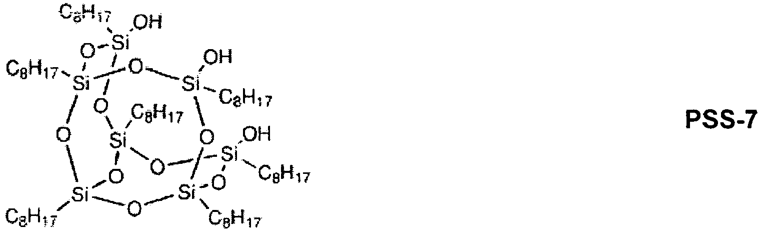

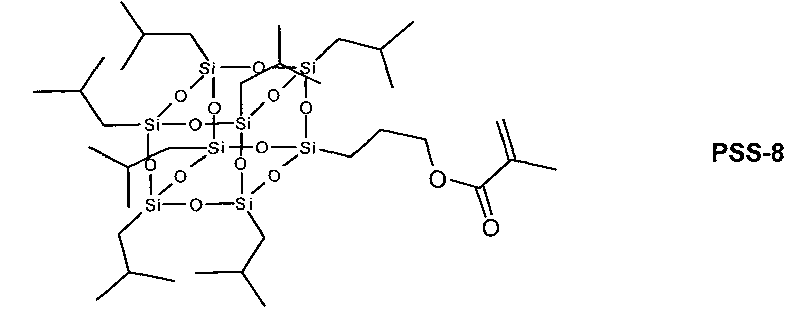

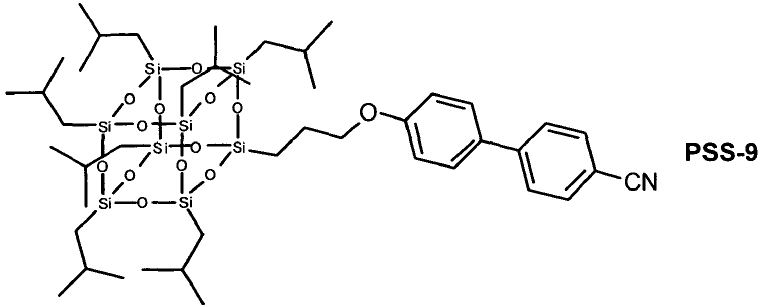

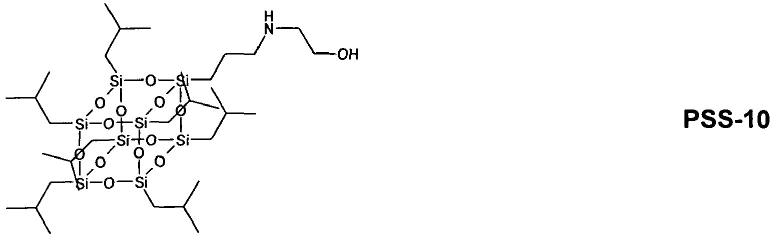

In einer weiteren bevorzugten Ausführungsform der Erfindung werden als Komponente (N) Teilchen verwendet, die als weitere Funktionalisierung neben dem polaren Anker eine oder mehrere polymerisierbare Gruppen aufweisen (vergleiche Gruppe P^{a} oder P^{b} unten). Bevorzugte polymerisierbare Gruppen sind Gruppen wie Acrylat-, Methacrylat-, Fluoracrylat-, Oxetan-, Vinyloxy- oder Epoxygruppe, besonders bevorzugt Acrylat und Methacrylat. Durch den Einschluss der Komponente (N) in die Polymerisation werden die Nanopartikel nachhaltig immobilisiert, wodurch sie ihre Funktion beibehalten.

Ein Vorteil der erfindungsgemäßen FK-Anzeigen ist, dass die Anzeige ohne die übliche Polyimid-Orientierungsschicht die gewünschte homöotrope Orientierung erreicht. Durch eine Polymerstabilisierung bleibt diese Orientierung auch bei hohen Temperaturen erhalten. Durch die Ankergruppe und die optionale Polymerstabiliseirung wird eine verbesserte Temperaturstabilität des elektrooptischen Schaltens erreicht. Die erfindungsgemäßen polymerstabilierten Anzeigen zeichnen sich durch verbesserte Schaltzeiten und besseres Kontrastverhältnis (Pretilt-Winkel und Temperaturabhängigkeit des Kontrasts) aus. Die polymerisierte Komponente kann gleichzeitig als eine Passivierungsschicht dienen, die die Zuverlässigkeit (die sog. 'reliability') des Displays erhöht. Die kleine Menge an Komponente (N) beeinflusst die Eigenschaften der FK-Medien praktisch unerheblich, daher kann eine breite Vielfalt an Flüssigkristall Komponenten in der FK-Anzeige verwendet werden.

Die erfindungsgemäßen FK-Anzeigen besitzen daher bevorzugt keine Orientierungsschicht ('alignment layer') für homöotrope Ausrichtung auf den Oberflächen der FK-Zelle.

Die erfindungsgemäßen FK-Anzeigen verwenden ein FK-Medium mit positiver dielektrischer Anisotropie (Δε ≥ 1,5). In der Regel handelt es sich dabei um eine VA-IPS-Anzeige mit mindestens auf einer Seite der FK-Zelle angeordneten Elektroden, bevorzugt mit Elektroden, die so angeordnet sind, dass sie ein überwiegend planar zur Substratoberfläche orientiertes elektrisches Feld erzeugen können, z. B. Interdigitalelektroden.

Die FK-Anzeigen sind in der üblichen Art und Weise mit Polarisator(en) versehen, die den Schaltvorgang des FK-Mediums sichtbar machen.

Die polymerisierte Komponente der FK-Zelle (Polymer) ist erhältlich durch Polymerisieren einer polymerisierbaren Komponente (Monomere). In der Regel sind die Monomere zunächst in dem FK-Medium gelöst und werden in der FK-Zelle polymerisiert nachdem sich eine homöotrope Ausrichtung oder ein hoher Tiltwinkel des FK-Medium eingestellt hat. Zur Unterstützung der gewünschten Ausrichtung kann eine Spannung an die FK-Zelle angelegt werden. Im einfachsten Fall erübrigt sich eine solche Spannung und die gewünschte Ausrichtung stellt sich allein durch die Beschaffenheit des Mediums und der Zellgeometrie ein.

Geeignete Monomere (polymerisierbare Komponente) für das FK-Medium sind solche aus dem Stand der Technik, die für PSA-VA- Anzeigen verwendet werden, insbesondere polymerisierbare Verbindungen der unten genannten Formel I und/oder der Formeln M1 bis M29. Die erfindungsgemäßen FK-Medien zur Verwendung in PSA-Anzeigen enthalten vorzugsweise < 5 Gew.-%, besonders bevorzugt < 1 Gew.-% und ganz besonders bevorzugt < 0.5 Gew.-% an polymerisierbaren Verbindungen, insbesondere polymerisierbare Verbindungen der unten genannten Formeln. Um einen ausreichenden Effekt zu erreichen werden bevorzugt 0,2 Gew.-% oder mehr eingesetzt. Die optimale Menge ist abhängig von der Schichtdicke.

Geeignete Monomere der polymerisierbaren Komponente des FK-Mediums werden durch die folgende Formel I beschrieben:

p^{a}-(Sp^{a})ₛ₁-A²-(Z¹-A¹)ₙ-(Sp^{b})ₛ₂-P^{b} I

worin die einzelnen Reste folgende Bedeutung besitzen:
- P^{a}, P^{b}: jeweils unabhängig voneinander eine polymerisierbare Gruppe,
- Sp^{a}, Sp^{b}: bei jedem Auftreten gleich oder verschieden eine Abstandsgruppe,
- s1, s2: jeweils unabhängig voneinander 0 oder 1,
- A¹, A²,: jeweils unabhängig voneinander einen Rest ausgewählt aus folgenden Gruppen

a) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O- und/oder -S- ersetzt sein können und worin auch ein oder mehrere H-Atome durch F ersetzt sein können,
b) der Gruppe bestehend aus 1,4-Phenylen und 1,3-Phenylen, worin auch eine oder zwei CH-Gruppen durch N ersetzt sein können und worin auch ein oder mehrere H-Atome durch L ersetzt sein können,
c) der Gruppe bestehend aus Tetrahydropyran-2,5-diyl, 1,3-Dioxan-2,5-diyl, Tetrahydrofuran-2,5-diyl, Cylcobut-1,3-diyl, Piperidin-1,4-diyl, Thiophen-2,5-diyl und Selenophen-2,5-diyl, welche auch ein oder mehrfach durch L substituiert sein können,
d) der Gruppe bestehend aus gesättigten, teilweise ungesättigten oder vollständig ungesättigten, und optional substituierten, polycyclischen Resten mit 5 bis 20 cyclischen C-Atomen, von denen auch eines oder mehrere durch Heteroatome ersetzt sein können, vorzugsweise ausgewählt aus der Gruppe bestehend aus Bicyclo[1.1.1]pentan-1,3-diyl, Bicyclo[2.2.2]octan-1,4-diyl, Spiro[3.3]heptan-2,6-diyl, 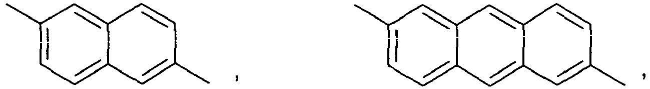 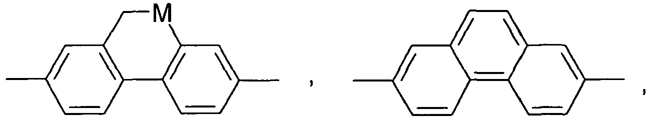 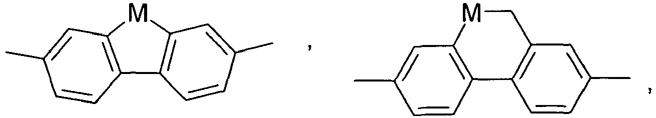 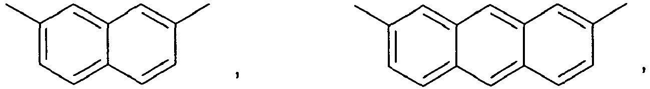 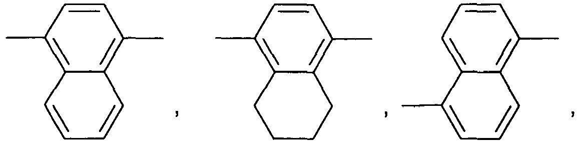 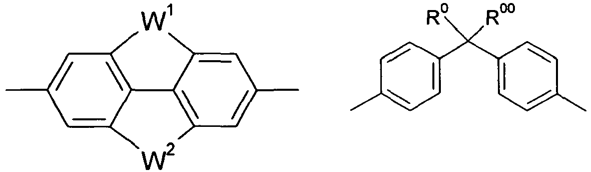 wobei in diesen Resten auch ein oder mehrere H- Atome durch L ersetzt sein können, und/oder eine oder mehrere Doppelbindungen durch Einfachbindungen ersetzt sein können, und/oder ein oder mehrere CH-Gruppen durch N ersetzt sein können,
   - n: 0, 1, 2 oder 3
   - Z¹: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist, -O-, -CO-, -C(R^{y}R^{z})-, -CH₂CF₂-, -CF₂CF₂-, oder eine Einfachbindung,
   - L: bei jedem Auftreten gleich oder verschieden F, Cl, CN, SCN, SF₅ oder geradkettiges oder verzweigtes, jeweils optional fluoriertes, Alkyl, Alkoxy, Alkylcarbonyl, Alkoxycarbonyl, Alkylcarbonyloxy oder Alkoxycarbonyloxy mit 1 bis 12 C-Atomen,
   - R⁰, R⁰⁰: jeweils unabhängig voneinander H, F oder geradkettiges oder verzweigtes Alkyl mit 1 bis 12 C-Atomen, worin auch ein oder mehrere H-Atome durch F ersetzt sein können,
   - M: -O-, -S-, -CH₂-, -CHY¹- oder -CY¹Y²-, und
   - Y¹, und Y²: jeweils unabhängig voneinander eine der oben für R⁰ angegebenen Bedeutungen, Cl oder CN, und vorzugsweise H, F, Cl, CN, OCF₃ oder CF₃.
   - W¹, W²: jeweils unabhängig voneinander -CH₂CH₂-, -CH=CH-, -CH₂-O-, -O-CH₂-, -C(R^{c}R^{d})- oder -O- bedeuten,
   - R^{c} und R^{d}: jeweils unabhängig voneinander H oder Alkyl mit 1 bis 6 C-Atomen, vorzugsweise H, Methyl oder Ethyl, bedeuten,

Die polymerisierbare Gruppe P^{a,b} ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C=C-Dreifachbindung, sowie zur Polymerisation unter Ringöffnung geeignete Gruppen wie beispielsweise Oxetan- oder Epoxygruppen

Bevorzugte Gruppen P^{a,b} sind ausgewählt aus der Gruppe bestehend aus CH₂=CW¹-CO-O-, CH₂=CW¹-CO-, , 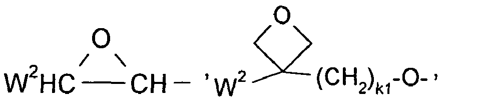 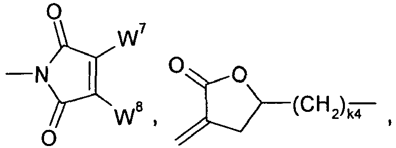 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN-, und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, welches optional mit einem oder mehreren, von P-Sp- verschiedenen Resten L wie oben definiert substituiert ist, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Besonders bevorzugte Gruppen P^{a,b} sind ausgewählt aus der Gruppe bestehend aus CH₂=CW¹-CO-O-, CH₂=CW¹-CO-, 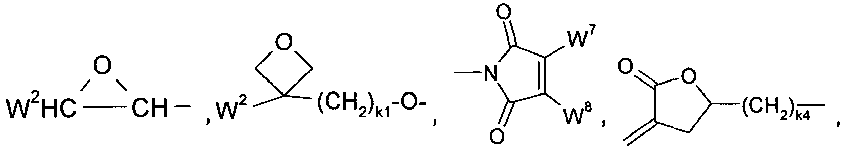 CH₂=CW²-O-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- und W⁴W⁵W⁶Si-, worin W¹ H, F, Cl, CN, CF₃, Phenyl oder Alkyl mit 1 bis 5 C-Atomen, insbesondere H, F, Cl oder CH₃ bedeutet, W² und W³ jeweils unabhängig voneinander H oder Alkyl mit 1 bis 5 C-Atomen, insbesondere H, Methyl, Ethyl oder n-Propyl bedeuten, W⁴, W⁵ und W⁶ jeweils unabhängig voneinander Cl, Oxaalkyl oder Oxacarbonylalkyl mit 1 bis 5 C-Atomen bedeuten, W⁷ und W⁸ jeweils unabhängig voneinander H, Cl oder Alkyl mit 1 bis 5 C-Atomen bedeuten, Phe 1,4-Phenylen bedeutet, k₁, k₂ und k₃ jeweils unabhängig voneinander 0 oder 1 bedeuten, k₃ vorzugsweise 1 bedeutet, und k₄ eine ganze Zahl von 1 bis 10 bedeutet.

Ganz besonders bevorzugte Gruppen P^{a,b} sind sind ausgewählt aus der Gruppe bestehend aus CH₂=CW¹-CO-O insbesondere CH₂=CH-CO-O-, CH₂=C(CH₃)-CO-O- und CH₂=CF-CO-O-, ferner CH₂=CH-O-, (CH₂=CH)₂CH-O-CO-, (CH₂=CH)₂CH-O-, 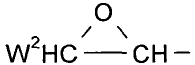 und

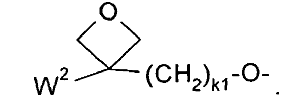

Ganz besonders bevorzugte Gruppen P^{a,b} sind daher ausgewählt aus der Gruppe bestehend aus Acrylat-, Methacrylat-, Fluoracrylat-, ferner Vinyloxy-, Chloracrylat-, Oxetan- und Epoxygruppen, und unter diesen bevorzugt eine Acrylat- oder Methacrylatgruppe.

Bevorzugte Abstandsgruppen Sp^{a,b} sind ausgewählt aus der Formel Sp"-X", so dass der Rest P^{a/b}-Sp^{a/b}- der Formel P^{a/b}-Sp"-X"- entspricht, wobei
- Sp": Alkylen mit 1 bis 20, vorzugsweise 1 bis 12 C-Atomen bedeutet, welches optional durch F, Cl, Br, I oder CN ein- oder mehrfach substituiert ist, und worin auch eine oder mehrere nicht benachbarte CH₂-Gruppen jeweils unabhängig voneinander so durch -O-, -S-, -NH-, -N(R⁰)-, -Si(R⁰⁰R⁰⁰⁰)-, -CO-, -CO-O-, -O-CO-, -O-CO-O-, -S-CO-, -CO-S-, -N(R⁰⁰)-CO-O-, -O-CO-N(R⁰⁰)-, -N(R⁰⁰)-CO-N(R⁰⁰)-, -CH=CH- oder -C=C- ersetzt sein können, dass O- und/oder S-Atome nicht direkt miteinander verknüpft sind,
- X": -O-, -S-, -CO-, -CO-O-, -O-CO-, -O-CO-O-, -CO-N(R⁰⁰)-, -N(R⁰⁰)-CO-, -N(R⁰⁰)-CO-N(R⁰⁰)-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰-, -CY²=CY³-, -C≡C-, -CH=CH-CO-O-, -O-CO-CH=CH- oder eine Einfachbindung bedeutet,
- R⁰⁰ und R⁰⁰⁰: jeweils unabhängig voneinander H oder Alkyl mit 1 bis 12 C-Atomen bedeuten, und
- Y² und Y³: jeweils unabhängig voneinander H, F, Cl oder CN bedeuten.
- X": ist vorzugsweise -O-, -S -CO-, -COO-, -OCO-, -O-COO-, -CO-NR⁰-, -NR⁰-CO-, -NR⁰-CO-NR⁰- oder eine Einfachbindung.

Typische Abstandsgruppen Sp" sind beispielsweise -(CH₂)ₚ₁-, -(CH₂CH₂O)_{q1}-CH₂CH₂-, -CH₂CH₂-S-CH₂CH₂-, -CH₂CH₂-NH-CH₂CH₂- oder -(SiR⁰⁰R⁰⁰⁰-O)ₚ₁-, worin p1 eine ganze Zahl von 1 bis 12 ist, q1 eine ganze Zahl von 1 bis 3 ist, und R⁰⁰ und R⁰⁰⁰ die oben angegebenen Bedeutungen besitzen.

Besonders bevorzugte Gruppen -Sp"-X"- sind -(CH₂)ₚ₁-, -(CH₂)ₚ₁-O-, -(CH₂)ₚ₁-O-CO-, -(CH₂)ₚ₁-O-CO-O-, worin p1 und q1 die oben angegebene Bedeutung haben.

Besonders bevorzugte Gruppen Sp" sind beispielsweise jeweils geradkettiges Ethylen, Propylen, Butylen, Pentylen, Hexylen, Heptylen, Octylen, Nonylen, Decylen, Undecylen, Dodecylen, Octadecylen, Ethylenoxyethylen, Methylenoxybutylen, Ethylenthioethylen, Ethylen-N-methyl-iminoethylen, 1-Methylalkylen, Ethenylen, Propenylen und Butenylen.

Besonders bevorzugte Monomere sind die folgenden: 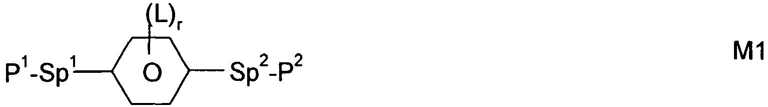 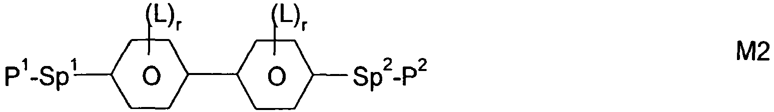 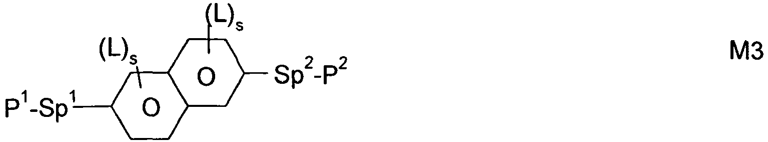 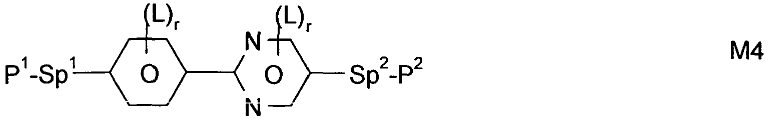 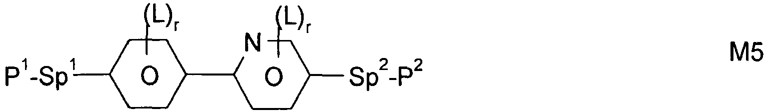 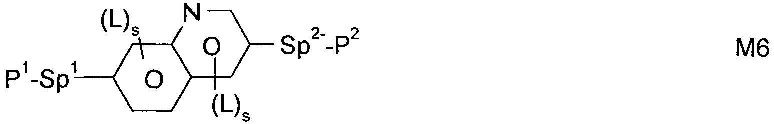 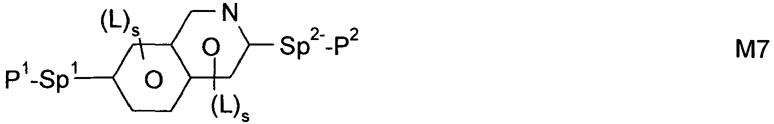 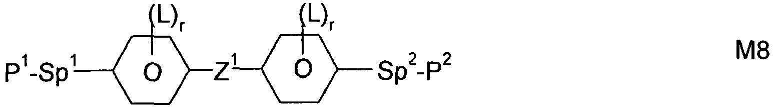 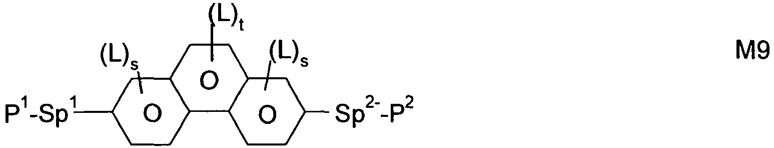 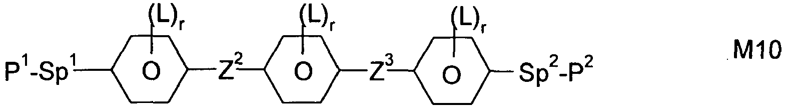 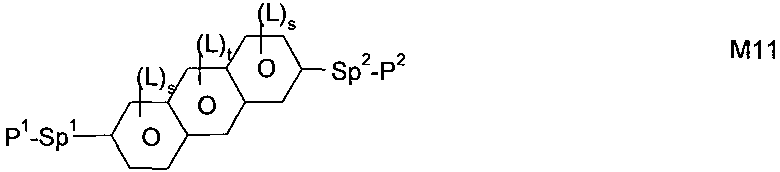 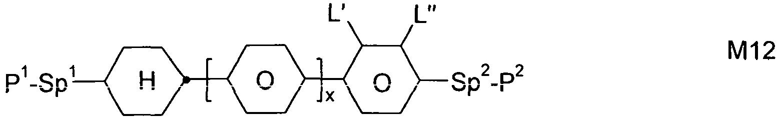 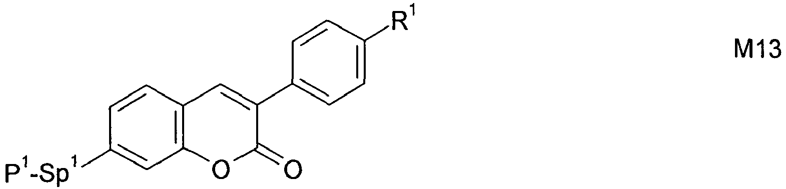 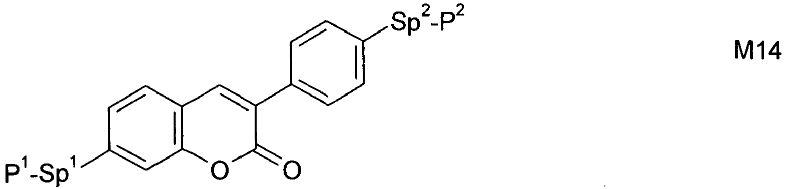 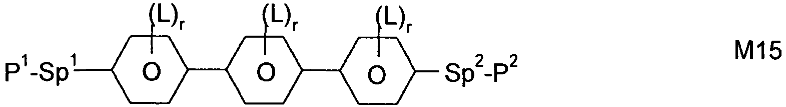 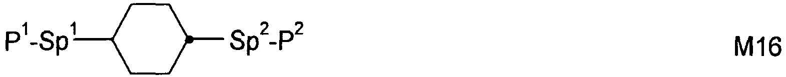 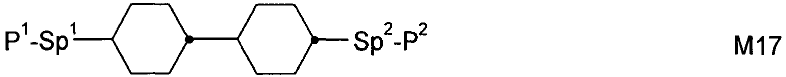 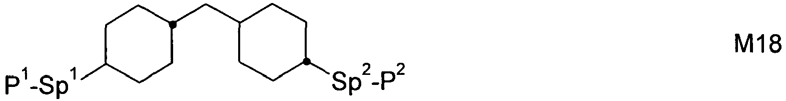 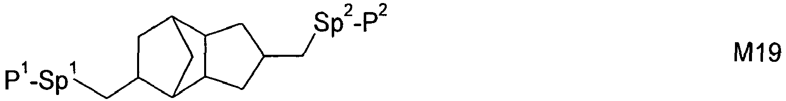 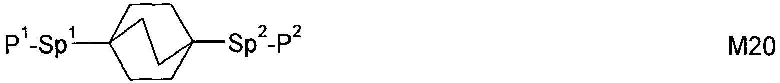 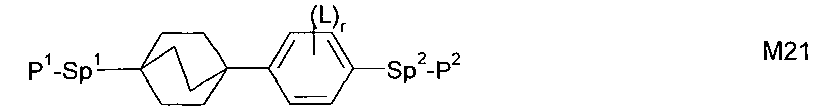 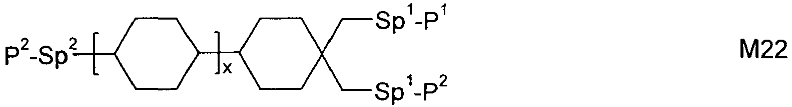 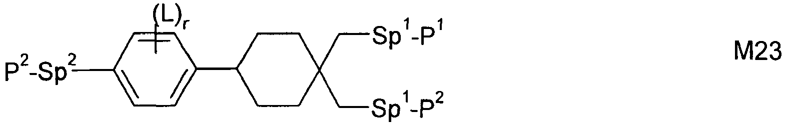 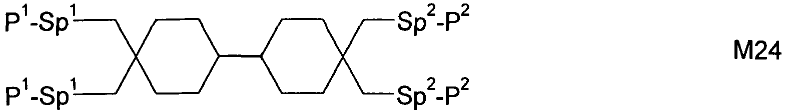 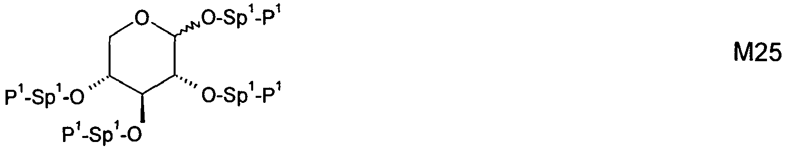 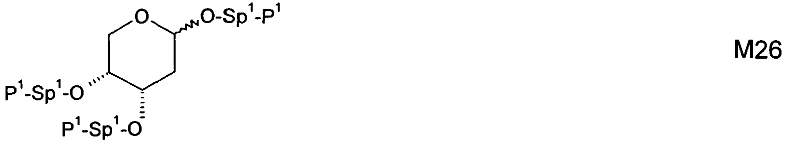 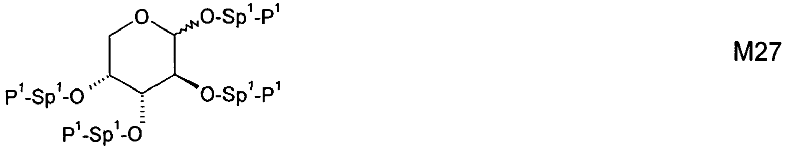 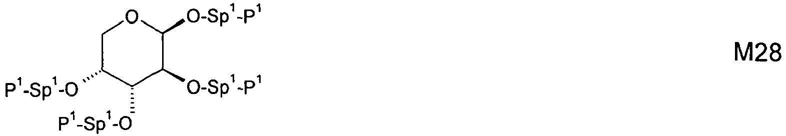 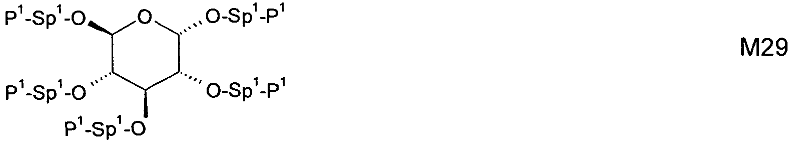 worin die einzelnen Reste folgende Bedeutung besitzen:
- P¹ und P²: jeweils unabhängig voneinander eine polymerisierbare Gruppe wie für Formel I definiert, bevorzugt eine Acrylat-, Methacrylat-, Fluoracrylat-, Oxetan-, Vinyloxy- oder Epoxygruppe,
- Sp¹ und Sp²: jeweils unabhängig voneinander eine Einfachbindung oder eine Abstandsgruppe, vorzugsweise mit einer der vor- und nachstehend für Sp^{a} angegebenen Bedeutungen, und besonders bevorzugt -(CH₂)ₚ₁-, -(CH₂)ₚ₁-O-, -(CH₂)ₚ₁-CO-O-oder-(CH₂)ₚ₁-O-CO-O-, worin p1 eine ganze Zahl von 1 bis 12 ist, und wobei in den letztgenannten Gruppen die Verknüpfung zur benachbarten Ring über das O-Atom erfolgt, wobei auch einer oder mehrere der Reste P¹-Sp¹- und P²-Sp²-einen Rest R^{aa} bedeuten können, mit der Maßgabe dass mindestens einer der vorhandenen Reste P¹-Sp¹- und P²-Sp²-nicht R^{aa} bedeutet,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-, -S-, -CO-, -CO-O-, -O-CO-, -O-CO-O- so ersetzt sein können, dass O- und/oder S-Atome nicht direkt miteinander verknüpft sind, und worin auch ein oder mehrere H-Atome durch F, Cl, CN oder P¹-Sp¹-ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl-und Alkinylreste mindestens zwei und die verzweigten Reste mindestens drei C-Atome aufweisen),
- R⁰, R⁰⁰: jeweils unabhängig voneinander H oder Alkyl mit 1 bis 12 C-Atomen,
- R^{y} und R^{z}: jeweils unabhängig voneinander H, F, CH₃ oder CF₃,
- Z¹: -O-, -CO-, -C(R^{y}R^{z})-, oder -CF₂CF₂-,
- Z² und Z³: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L: bei jedem Auftreten gleich oder verschieden F, Cl, CN, SCN, SF₅ oder geradkettiges oder verzweigtes, optional ein- oder mehrfach fluoriertes, Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2, und
- x: 0 oder 1.

Vorzugsweise umfasst das FK-Medium oder die polymerisierbare Komponente eine oder mehrere Verbindungen ausgewählt aus der Gruppe der Formeln M1-M21, besonders bevorzugt der Formeln M2-M9, und ganz besonders bevorzugt aus der Gruppe der Formeln M2, M16, M17 und M18. Vorzugsweise umfasst das FK-Medium oder die polymerisierbare Komponente keine Verbindungen der Formel M10, worin Z² und Z³ -(CO)O-oder -O(CO)- bedeuten.

Zur Herstellung von PSA-Anzeigen werden die polymerisierbaren Verbindungen im FK-Medium zwischen den Substraten der FK-Anzeige, optional unter Anlegen einer Spannung, durch in-situ-Polymerisation polymerisiert oder vernetzt (falls eine polymerisierbare Verbindung zwei oder mehr polymerisierbare Gruppen enthält). Die Polymerisation kann in einem Schritt durchgeführt werden. Es ist auch möglich, zunächst in einem ersten Schritt die Polymerisation unter Anlegen einer Spannung durchzuführen, um einen pretilt-Winkel zu erzeugen, und anschließend in einem zweiten Polymerisationsschritt ohne anliegende Spannung die im ersten Schritt nicht abreagierten Verbindungen zu polymerisieren bzw. zu vernetzen ("end curing").

Geeignete und bevorzugte Polymerisationsmethoden sind beispielsweise die thermische oder Photopolymerisation, vorzugsweise Photopolymerisation, insbesondere UV-Photopolymerisation. Dabei können gegebenenfalls auch ein oder mehrere Initiatoren zugesetzt werden. Geeignete Bedingungen für die Polymerisation, sowie geeignete Arten und Mengen der Initiatoren, sind dem Fachmann bekannt und in der Literatur beschrieben. Für die radikalische Polymerisation eignen sich zum Beispiel die kommerziell erhältlichen Photoinitiatoren Irgacure651®, Irgacure184®, Irgacure907®, Irgacure369®, oder Darocure1173® (Ciba AG). Falls ein Initiator eingesetzt wird, beträgt dessen Anteil vorzugsweise 0,001 bis 5 Gew.-%, besonders bevorzugt 0,001 bis 1 Gew.-%.

Die erfindungsgemäßen polymerisierbaren Verbindungen eignen sich auch für die Polymerisation ohne Initiator, was erhebliche Vorteile mit sich bringt, wie beispielsweise geringere Materialkosten und insbesondere eine geringere Verunreinigung des FK-Mediums durch mögliche Restmengen des Initiators oder dessen Abbauprodukte. Die Polymerisation kann somit auch ohne Zusatz eines Initiators erfolgen. Somit enthält das FK-Medium in einer bevorzugten Ausführungsform keinen Polymerisationsinitiator.

Die polymerisierbare Komponente oder das FK-Medium können auch einen oder mehrere Stabilisatoren enthalten, um eine unerwünschte spontane Polymerisation der RMs, beispielsweise während der Lagerung oder des Transports, zu verhindern. Geeignete Arten und Mengen der Stabilisatoren sind dem Fachmann bekannt und in der Literatur beschrieben. Besonders geeignet sind zum Beispiel die kommerziell erhältlichen Stabilisatoren der Serie Irganox® (Ciba AG), wie beispielsweise Irganox® 1076. Falls Stabilisatoren eingesetzt werden, beträgt deren Anteil, bezogen auf die Gesamtmenge der RMs beziehungsweise der polymerisierbaren Komponente, vorzugsweise 10 - 10000 ppm, besonders bevorzugt 50 - 500 ppm.

Die FK-Medien zur Verwendung in den erfindungsgemäßen FK-Anzeigen enthalten, neben den oben beschriebenen polymerisierbaren Verbindungen und der Komponente (N) eine FK-Mischung ("Host-Mischung") enthaltend eine oder mehr, vorzugsweise zwei oder mehr niedermolekulare (d.h. monomere bzw. unpolymerisierte) Verbindungen. Letztere sind stabil bzw. unreaktiv gegenüber einer Polymerisationsreaktion unter den zur Polymerisation der polymerisierbaren Verbindungen verwendeten Bedingungen. Prinzipiell eignet sich als Host-Mischung jede zur Verwendung in herkömmlichen TN-, IPS-, FFS- und VA-IPS-Anzeigen geeignete dielektrisch positive FK-Mischung.

Geeignete FK-Mischungen mit positiver dielektrischer Anisotropie, die sich für LCDs und speziell für IPS-Anzeigen eignen, sind z.B. aus JP 07-181 439 (A), EP 0 667 555, EP 0 673 986, DE 195 09 410, DE 195 28 106, DE 195 28 107, WO 96/23 851 und WO 96/28 521 bekannt.

Im Folgenden werden bevorzugte Ausführungsformen für das erfindungsgemäße flüssigkristalline Medium angeführt:

LC-Medium, welches zusätzlich eine oder mehrere Verbindungen der Formel II und/oder III enthält: 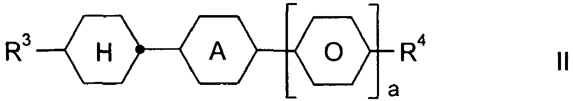 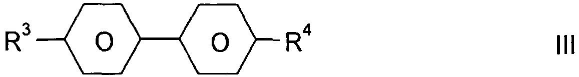 worin
- Ring A: 1,4-Phenylen oder trans-1,4-Cyclohexylen bedeutet,
- a: 0 oder 1 ist,
- R³: jeweils unabhängig voneinander Alkyl mit 1 bis 9 C-Atomen oder Alkenyl mit 2 bis 9 C-Atomen bedeutet, vorzugsweise Alkenyl mit 2 bis 9 C-Atomen, und
- R⁴: jeweils unabhängig voneinander einen unsubstituierten oder halogenierten Alkylrest mit 1 bis 12 C-Atomen, wobei auch eine oder zwei nicht benachbarte CH₂-Gruppen durch -O-, -CH=CH-, -CH=CF-, -(CO)-, -O(CO)- oder -(CO)O- so ersetzt sein können, dass O-Atome nicht direkt miteinander verknüpft sind, und vorzugsweise Alkyl mit 1 bis 12 C-Atomen oder Alkenyl mit 2 bis 9 C-Atomen bedeutet.

Die Verbindungen der Formel II sind vorzugsweise ausgewählt aus der Gruppe bestehend aus folgenden Formeln: 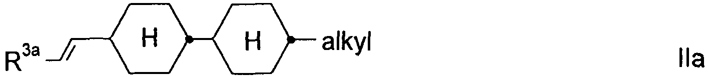 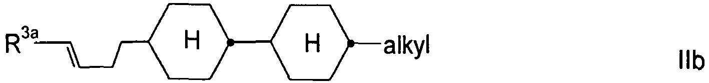 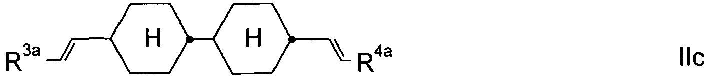 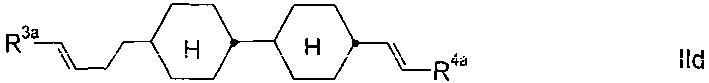 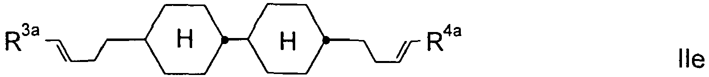 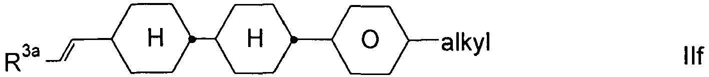 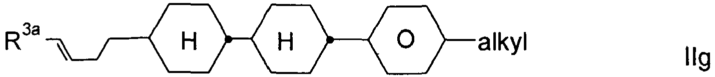 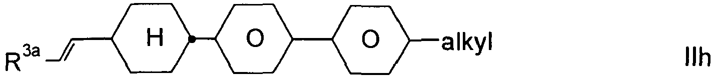 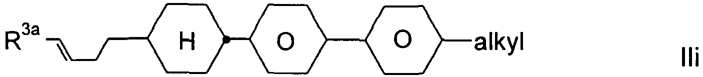 worin R^{3a} und R^{4a} jeweils unabhängig voneinander H, CH₃, C₂H₅ oder C₃H₇ bedeuten, und "alkyl" eine geradkettige Alkylgruppe mit 1 bis 8, vorzugsweise 1, 2, 3, 4 oder 5 C-Atomen bedeutet. Besonders bevorzugt sind Verbindungen der Formel IIa und IIf, insbesondere solche, worin R^{3a} H oder CH₃, vorzugsweise H, bedeutet, und Verbindungen der Formel IIc, insbesondere solche, worin R^{3a} und R^{4a} H, CH₃ oder C₂H₅ bedeuten.

Die Verbindungen der Formel III sind vorzugsweise ausgewählt aus der Gruppe bestehend aus den folgenden Formeln: 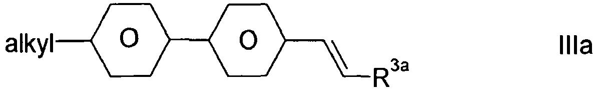 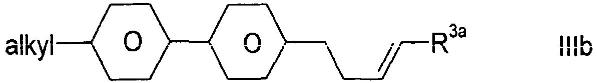 worin "alkyl" und R^{3a} die oben angegebenen Bedeutungen haben und R^{3a} vorzugsweise H oder CH₃ bedeutet. Besonders bevorzugt sind Verbindungen der FormeIIIb;
- LC-Medium, welches zusätzlich eine oder mehrere Verbindungen ausgewählt aus der Gruppe bestehend aus den folgenden Formeln enthält: 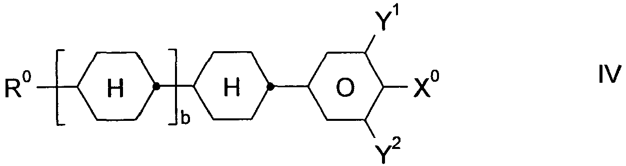 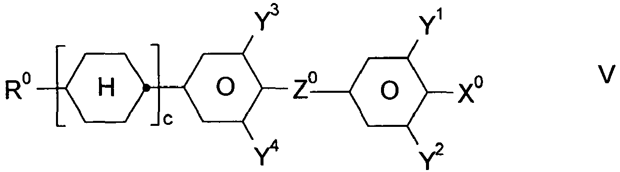 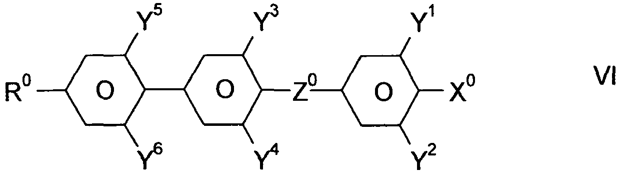 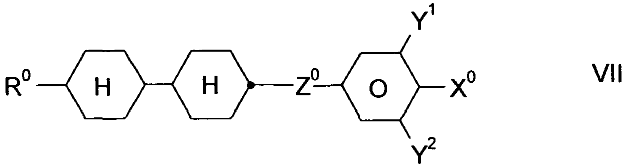 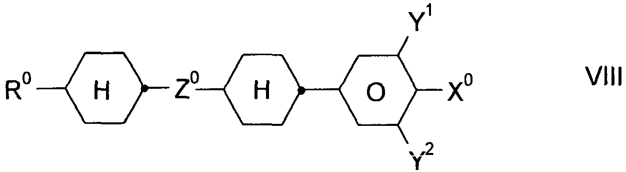 worin
   - R⁰: einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 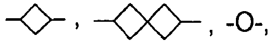 -(CO)O- oder -O(CO)- so ersetzt sein können, dass O-Atome nicht direkt miteinander verknüpft sind, und worin auch ein oder mehrere H-Atome durch Halogen ersetzt sein können,
   - X⁰: F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,
   - Y¹⁻⁶: jeweils unabhängig voneinander H oder F,
   - Z⁰: -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- oder -OCF₂-, in den Formeln V und VI auch eine Einfachbindung, und
   b und c jeweils unabhängig voneinander 0 oder 1
   bedeuten.

In den Verbindungen der Formel IV bis VIII bedeutet X⁰ vorzugsweise F oder OCF₃, ferner OCHF₂, CF₃, CF₂H, Cl, OCH=CF₂. R⁰ ist vorzugsweise geradkettiges Alkyl oder Alkenyl mit jeweils bis zu 6 C-Atomen.

Die Verbindungen der Formel IV sind vorzugsweise ausgewählt aus der Gruppe bestehend aus den folgenden Formeln: 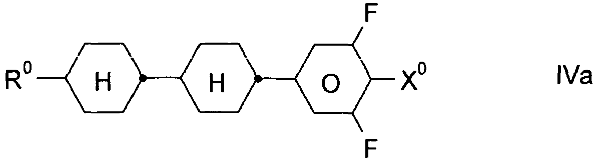 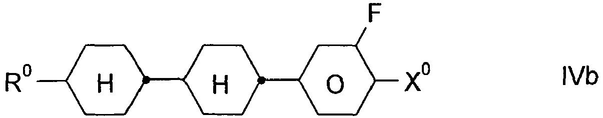 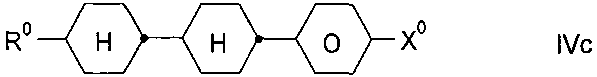 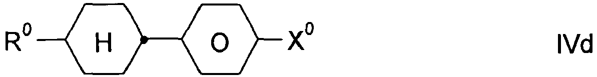 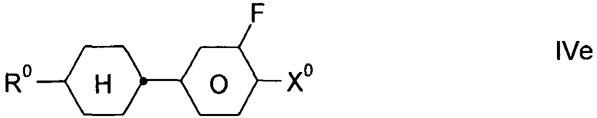 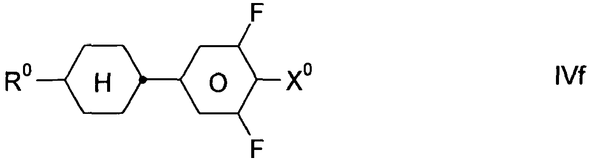 worin R⁰ und X⁰ die oben angegebenen Bedeutungen haben.

Vorzugsweise bedeutet in Formel IV R⁰ Alkyl mit 1 bis 8 C-Atomen und X⁰ F, Cl, OCHF₂ oder OCF₃, ferner OCH=CF₂. In der Verbindung der Formel IVb bedeutet R⁰ vorzugsweise Alkyl oder Alkenyl. In der Verbindung der Formel IVd bedeutet X⁰ vorzugsweise Cl, ferner F.

Die Verbindungen der Formel V sind vorzugsweise ausgewählt aus der Gruppe bestehend aus den folgenden Formeln: 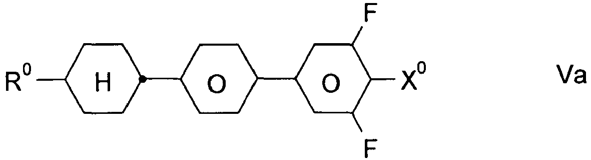 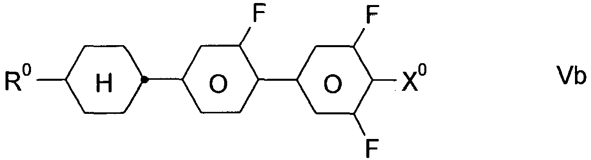 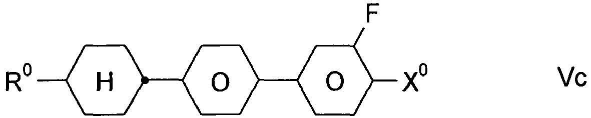 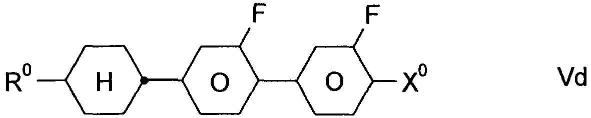 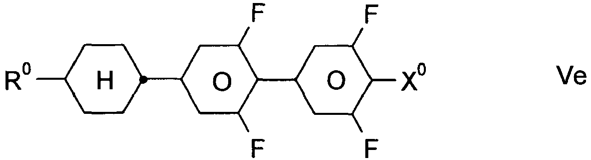 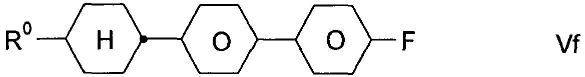 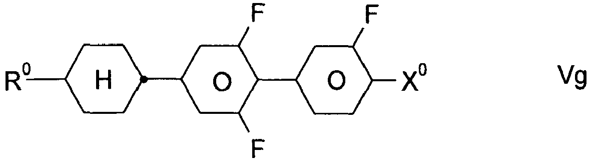 worin R⁰ und X⁰ die oben angegebenen Bedeutungen haben. Vorzugsweise bedeutet R⁰ in Formel V Alkyl mit 1 bis 8 C-Atomen und X⁰ F;
LC-Medium, welches eine oder mehrere Verbindungen der Formel VI-1 enthält: 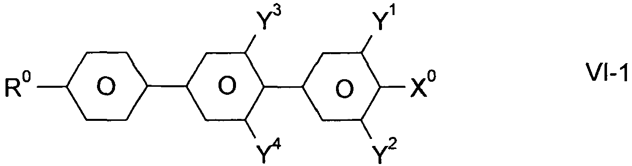 besonders bevorzugt solche ausgewählt aus der Gruppe bestehend aus den folgenden Formeln: 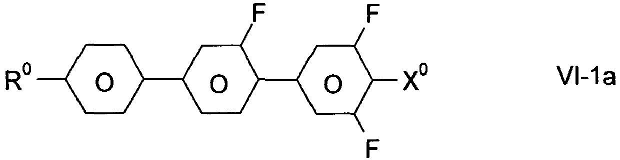 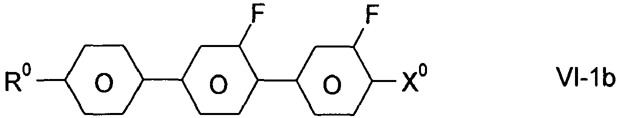 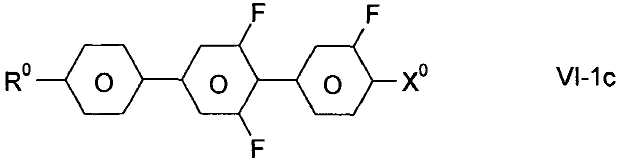 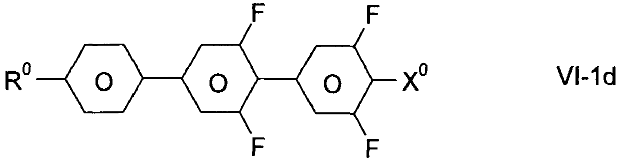 worin R⁰ und X⁰ die oben angegebenen Bedeutungen haben. Vorzugsweise bedeutet R⁰ in Formel VI Alkyl mit 1 bis 8 C-Atomen und X⁰ F, ferner OCF₃.

LC-Medium, welches eine oder mehrere Verbindungen der Formel VI-2 enthält: 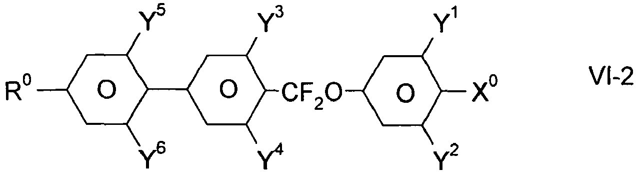 besonders bevorzugt solche ausgewählt aus der Gruppe bestehend aus den folgenden Formeln: 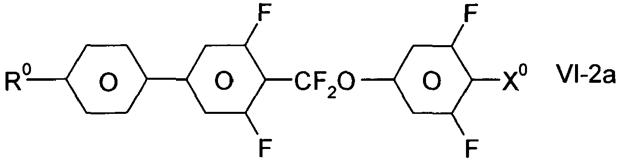 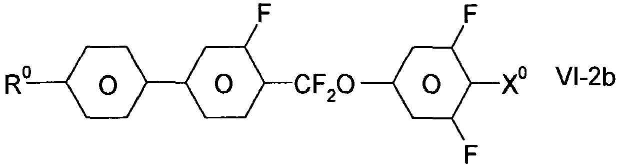 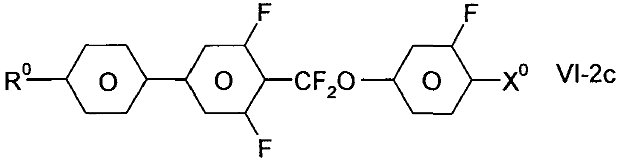 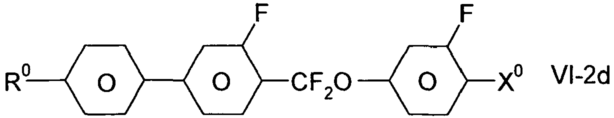 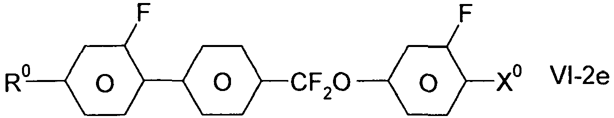 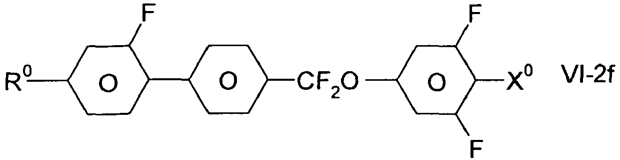 worin R⁰ und X⁰ die oben angegebenen Bedeutungen haben.

Vorzugsweise bedeutet R⁰ in Formel VI Alkyl mit 1 bis 8 C-Atomen und X⁰ F;
LC-Medium, welches vorzugsweise eine oder mehrere Verbindungen der Formel VII, worin Z⁰ -CF₂O-, -CH₂CH₂ oder -(CO)O- bedeutet, enthält, besonders bevorzugt solche ausgewählt aus der Gruppe bestehend aus den folgenden Formeln: 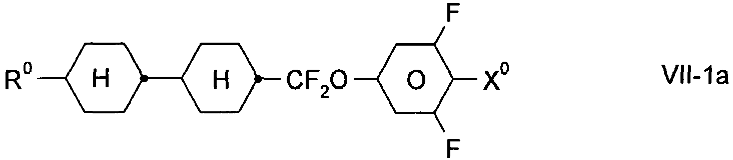 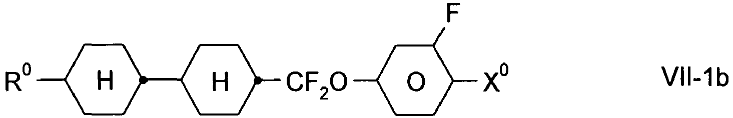 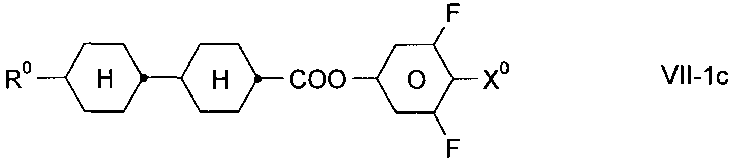 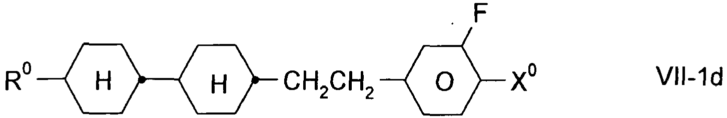 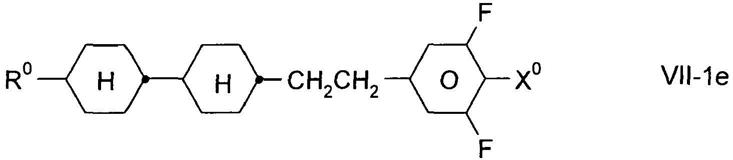 worin R⁰ und X⁰ die oben angegebenen Bedeutungen haben. Vorzugsweise bedeutet R⁰ in Formel VII Alkyl mit 1 bis 8 C-Atomen und X⁰ F, ferner OCF₃.

Die Verbindungen der Formel VIII sind vorzugsweise ausgewählt aus der Gruppe bestehend aus den folgenden Formeln: 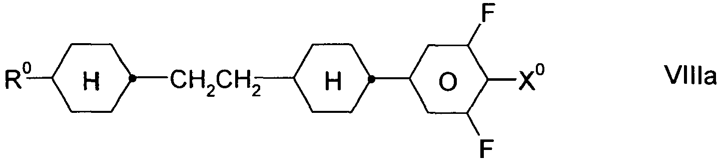 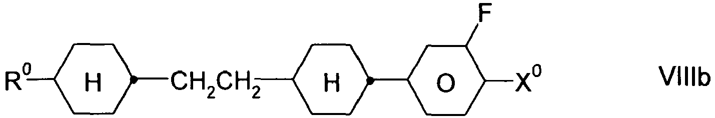 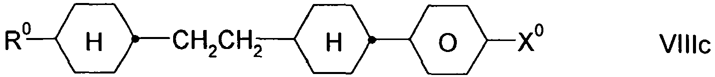 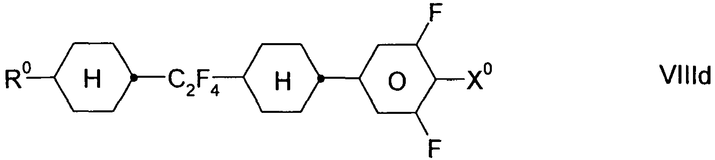 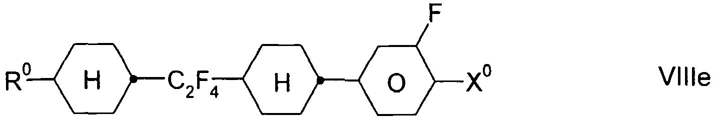 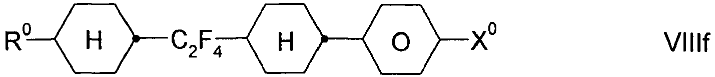 worin R⁰ und X⁰ die oben angegebenen Bedeutungen haben. Vorzugsweise bedeutet R⁰ einen geradkettigen Alkylrest mit 1 bis 8 C-Atomen. X⁰ bedeutet vorzugsweise F.
- LC-Medium, welches zusätzlich eine oder mehrere Verbindungen der folgenden Formel enthält: 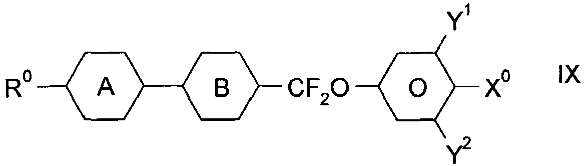 worin R⁰, X⁰, Y¹ und Y² die oben angegebene Bedeutung besitzen, und 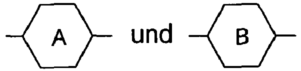 jeweils unabhängig voneinander 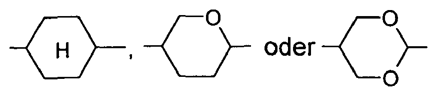 bedeuten, wobei die Ringe A und B nicht beide gleichzeitig Cyclohexylen bedeuten;
   Die Verbindungen der Formel IX sind vorzugsweise ausgewählt aus der Gruppe bestehend aus den folgenden Formeln: 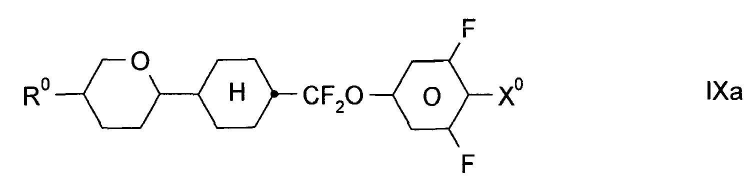 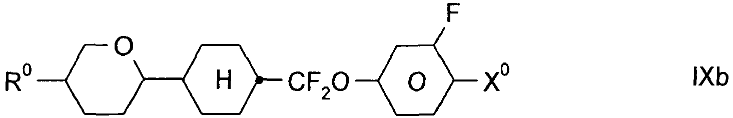 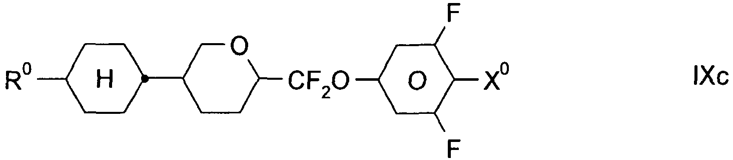 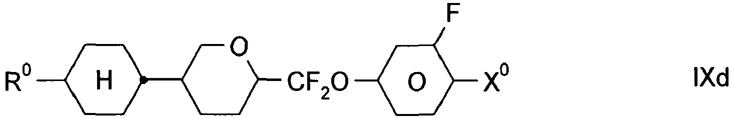 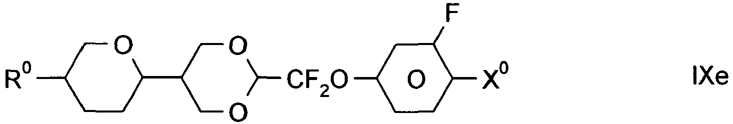 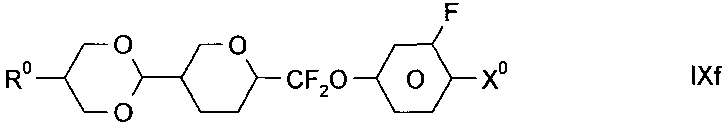 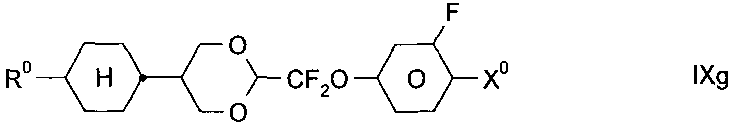 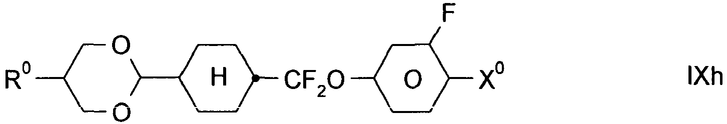 worin R⁰ und X⁰ die oben angegebenen Bedeutungen haben. Vorzugsweise bedeutet R⁰ Alkyl mit 1 bis 8 C-Atomen und X⁰ F. Besonders bevorzugt sind Verbindungen der Formel IXa;
- LC-Medium, welches zusätzlich eine oder mehrere Verbindungen ausgewählt aus der Gruppe bestehend aus den folgenden Formeln enthält: 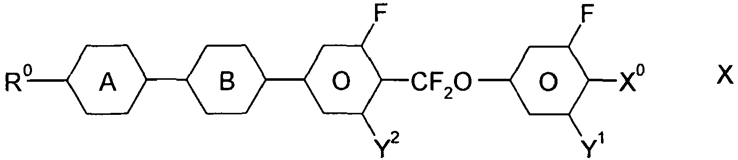 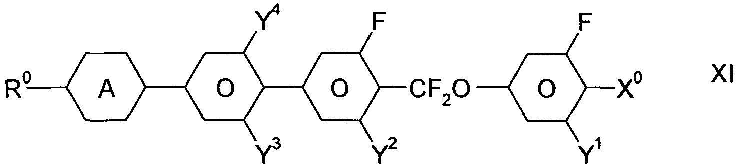 worin R⁰, X⁰ und Y¹⁻⁴ die oben angegebenen Bedeutungen besitzen, und 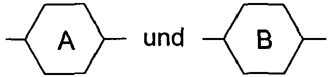 jeweils unabhängig voneinander 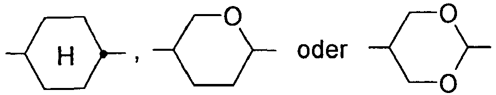 bedeuten;
   Die Verbindungen der Formeln X und XI sind vorzugsweise ausgewählt aus der Gruppe bestehend aus den folgenden Formeln: 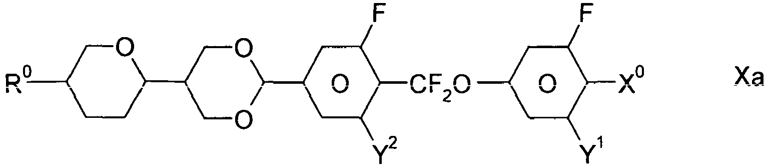 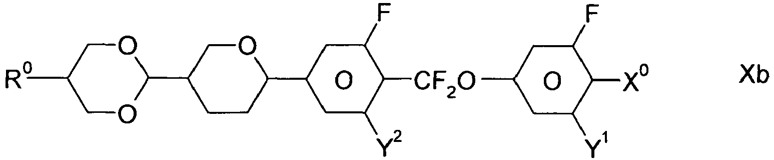 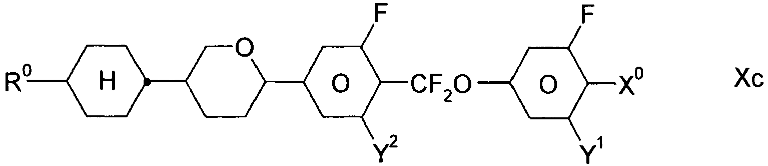 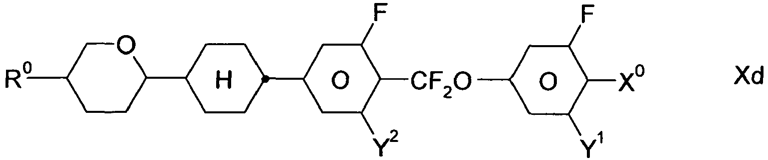 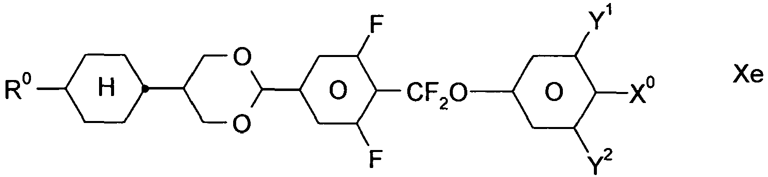 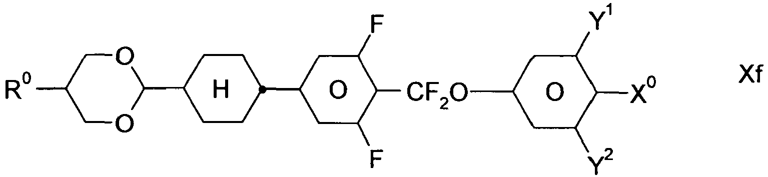 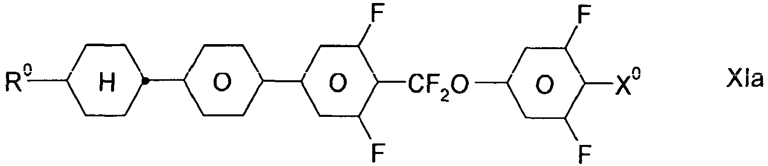 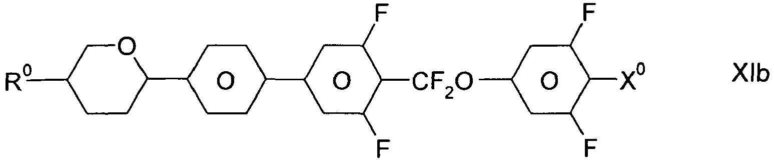 worin R⁰ und X⁰ die oben angegebenen Bedeutungen haben. Vorzugsweise bedeutet R⁰ Alkyl mit 1 bis 8 C-Atomen und/oder X⁰ F. Besonders bevorzugte Verbindungen sind solche, worin Y¹ F und Y² H oder F, vorzugsweise F, bedeuten;
- LC-Medium, welches zusätzlich eine oder mehrere Verbindungen der folgenden Formel XII enthält: 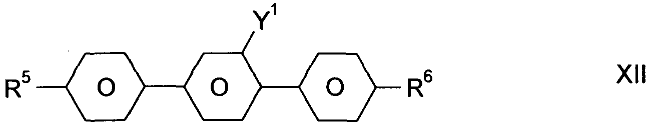 worin R⁵ und R⁶ jeweils unabhängig voneinander n-Alkyl, Alkoxy, Oxaalkyl, Fluoralkyl oder Alkenyl mit jeweils bis zu 9 C-Atomen bedeuten, und vorzugsweise jeweils unabhängig voneinander Alkyl mit 1 bis 7 C-Atomen oder Alkenyl mit 2 bis 7 C-Atomen bedeuten. Y¹ bedeutet H oder F.
   Bevorzugte Verbindungen der Formel XII sind solche ausgewählt aus der Gruppe bestehend aus den folgenden Formeln: 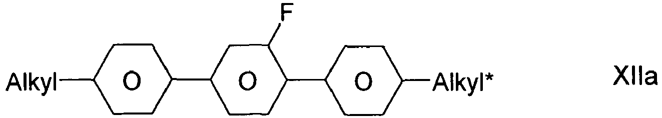 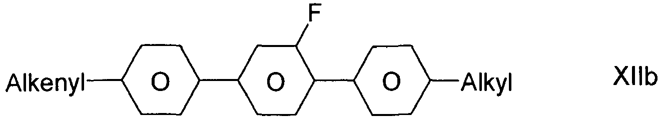 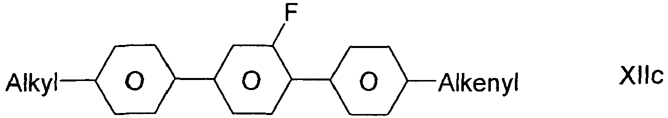 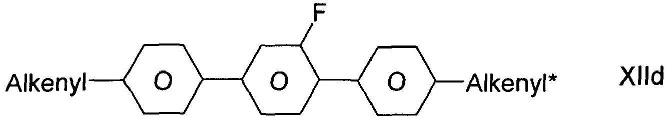 worin
   - Alkyl und Alkyl*: jeweils unabhängig voneinander einen geradkettigen Alkylrest mit 1 bis 6 C-Atomen, und
   - Alkenyl und Alkenyl*: jeweils unabhängig voneinander einen geradkettigen Alkenylrest mit 2 bis 6 C-Atomen bedeuten.
   Ganz besonders bevorzugt sind Verbindungen der folgenden Formel 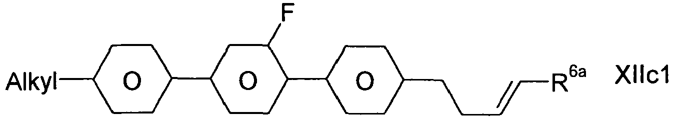 worin Alkyl die oben angegebene Bedeutung hat und R^{6a} H oder CH₃ bedeutet.
- LC-Medium, welches zusätzlich eine oder mehrere Verbindungen ausgewählt aus der Gruppe bestehend aus den folgenden Formeln enthält: 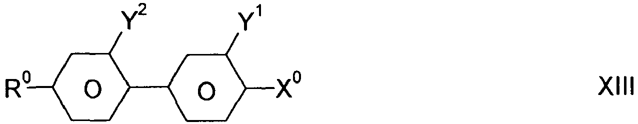 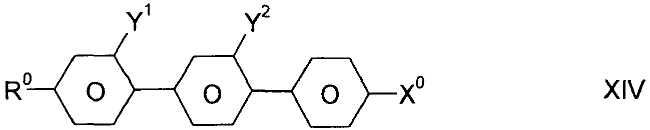 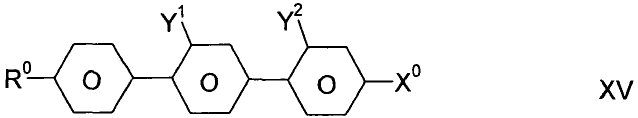 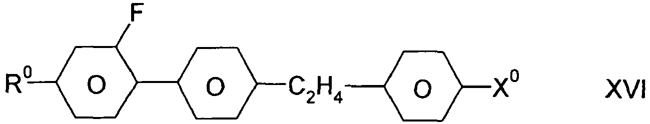 worin R⁰, X⁰, Y¹ und Y² die oben angegebenen Bedeutungen haben. Vorzugsweise bedeutet R⁰ Alkyl mit 1 bis 8 C-Atomen und X⁰ F oder Cl;
   Die Verbindungen der Formeln XIII und XIV sind vorzugsweise ausgewählt aus der Gruppe bestehend aus den folgenden Formeln: 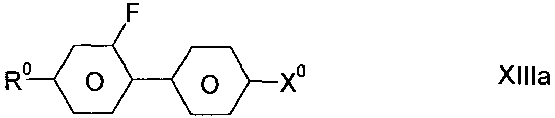 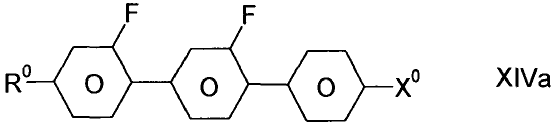 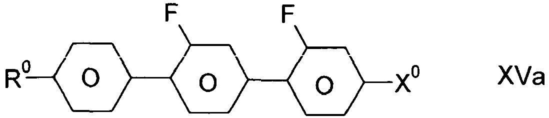 worin R⁰ und X⁰ die oben angegebenen Bedeutungen haben. Vorzugsweise bedeutet R⁰ Alkyl mit 1 bis 8 C-Atomen. In den Verbindungen der Formel XIII bedeutet X⁰ vorzugsweise F oder Cl.
- LC-Medium, welches zusätzlich eine oder mehrere Verbindungen der Formel D1 und/oder D2 enthält: 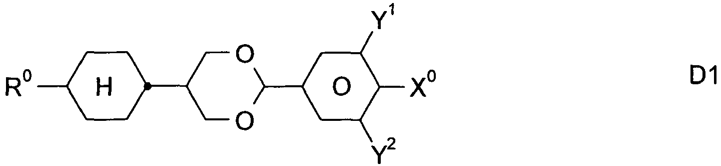 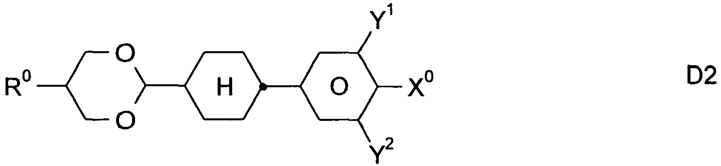 worin Y¹, Y², R⁰ und X⁰ die oben angegebene Bedeutung besitzen. Vorzugsweise bedeutet R⁰ Alkyl mit 1 bis 8 C-Atomen und X⁰ F. Besonders bevorzugt sind Verbindungen der folgenden Formeln: 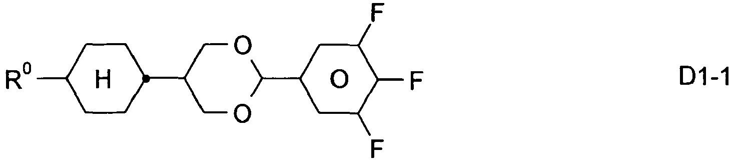 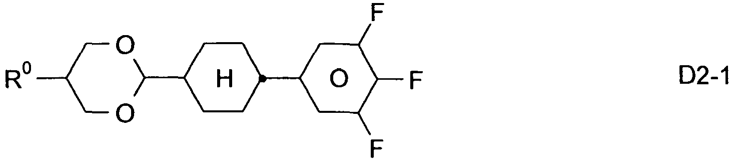 worin R⁰ die oben angegebenen Bedeutungen hat und vorzugsweise geradkettiges Alkyl mit 1 bis 6 C-Atomen, insbesondere C₂H₅, n-C₃H₇ oder n-C₅H₁₁ bedeutet.
- LC-Medium, welches zusätzlich eine oder mehrere Verbindungen der folgenden Formeln enthält: 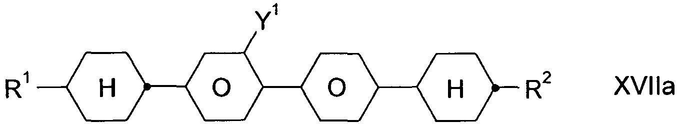 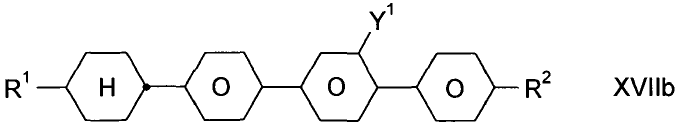 worin Y¹, R¹ und R² die oben angegebene Bedeutung besitzen. R¹ und R² bedeuten vorzugsweise jeweils unabhängig voneinander Alkyl mit 1 bis 8 C-Atomen. Y¹ bedeutet vorzugsweise F. Bevorzugte Medien enthalten 1-15 Gew.%, insbesondere 1-10 Gew.% dieser Verbindungen.
- LC-Medium, welches zusätzlich eine oder mehrere Verbindungen der folgenden Formel enthält: 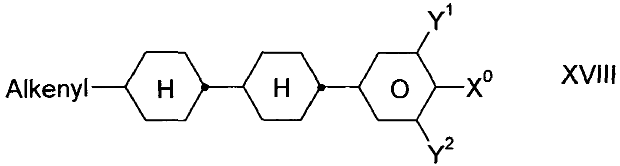 worin X⁰, Y¹ und Y² die oben angegebenen Bedeutungen besitzen und "Alkenyl" C₂₋₇-Alkenyl bedeutet. Besonders bevorzugt sind Verbindungen der folgenden Formel, 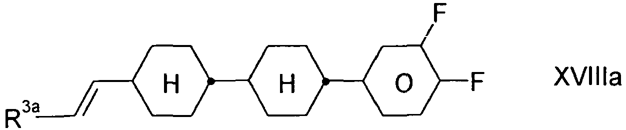 worin R^{3a} die oben angegebene Bedeutung hat und vorzugsweise H bedeutet;
- LC-Medium, welches zusätzlich eine oder mehrere Vierkern-Verbindungen ausgewählt aus der Gruppe bestehend aus den Formeln XIX bis XXV enthält: 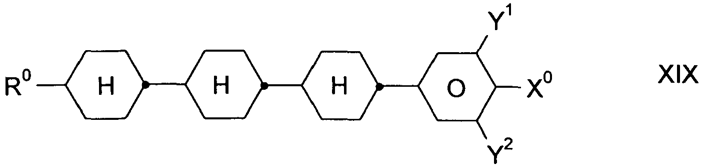 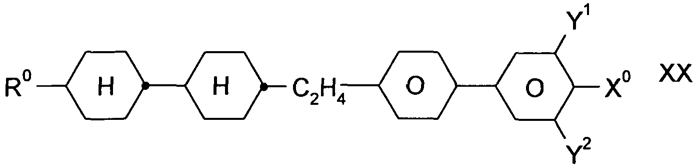 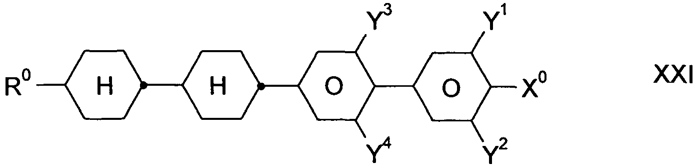 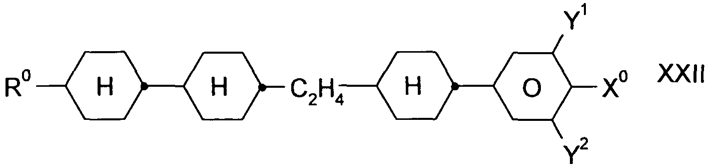 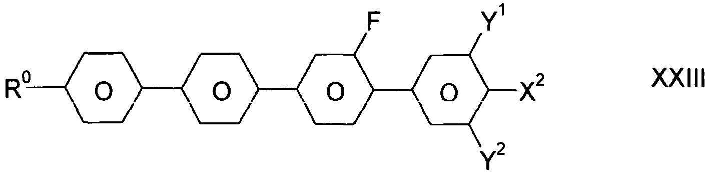 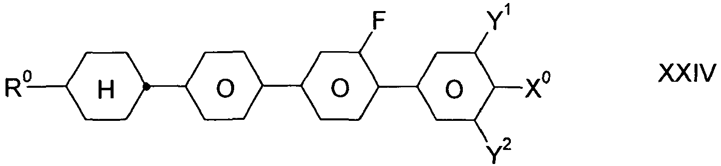 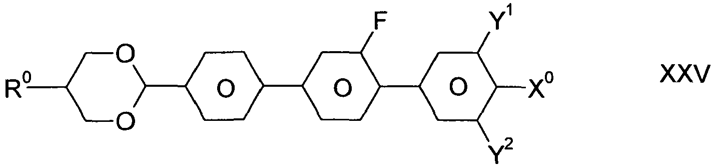 worin Y¹⁻⁴, R⁰ und X⁰ jeweils unabhängig voneinander eine der oben angegebenen Bedeutungen haben. X⁰ ist vorzugsweise F, Cl, CF₃, OCF₃ oder OCHF₂. R⁰ bedeutet vorzugsweise Alkyl, Alkoxy, Oxaalkyl, Fluoralkyl oder Alkenyl mit jeweils bis zu 8 C-Atomen.
- LC-Medium, welches zusätzlich eine oder mehrere Verbindungen der folgenden Formel enthält: 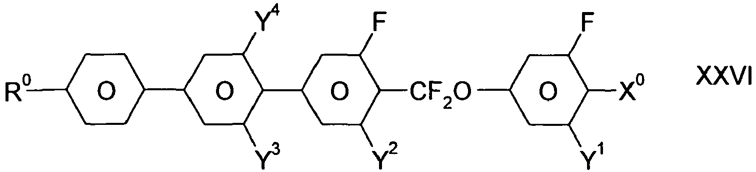 worin R⁰, X⁰ und Y¹⁻⁴ die oben angegebenen Bedeutungen besitzen. Besonders bevorzugt sind Verbindungen der folgenden Formel: 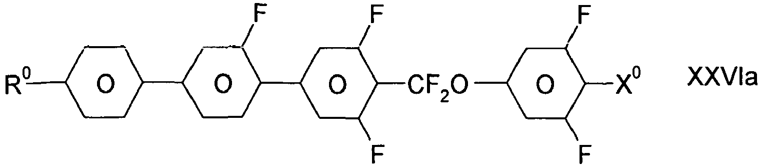
- LC-Medium, welches zusätzlich eine oder mehrere Verbindungen der folgenden Formel enthält: 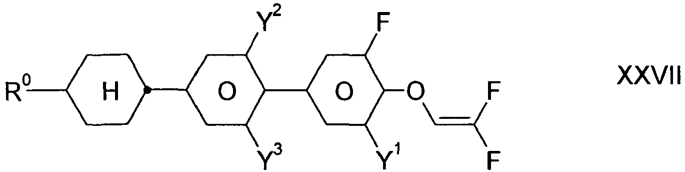 worin R⁰ undY¹⁻³ die oben angegebenen Bedeutungen besitzen. Besonders bevorzugt sind Verbindungen der folgenden Formeln: 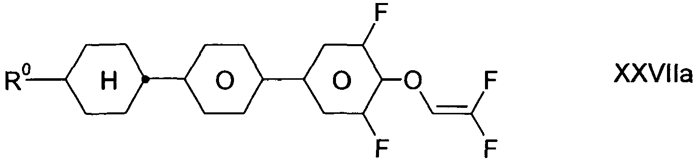 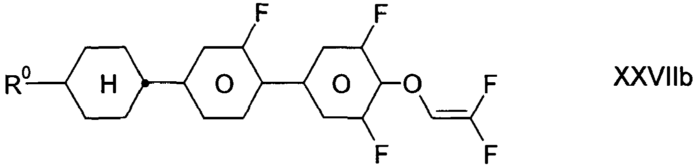 worin R⁰ die oben angegebene Bedeutung besitzt und vorzugsweise Alkyl, Alkoxy, Oxaalkyl, Fluoralkyl oder Alkenyl mit jeweils bis zu 8 C-Atomen bedeutet. 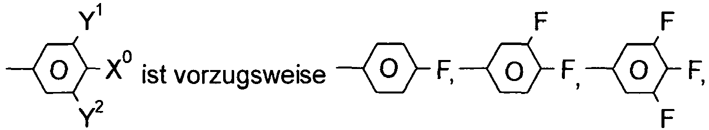 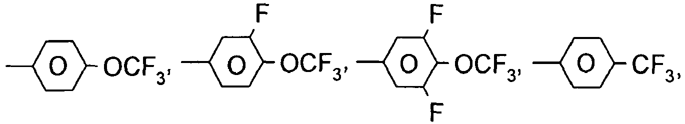 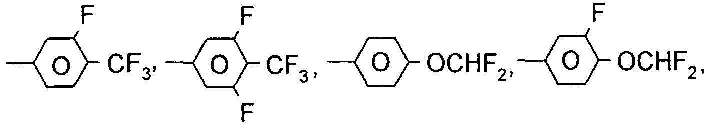 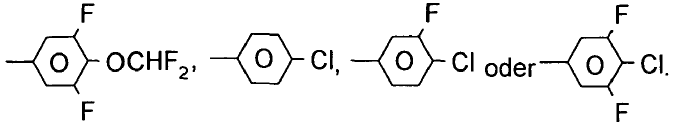
- R⁰ ist im Allgemeinen vorzugsweise geradkettiges Alkyl oder Alkenyl mit 2 bis 7 C-Atomen;
- X⁰ ist vorzugsweise F, ferner OCF₃, Cl oder CF₃ ;
- Das Medium enthält vorzugsweise eine oder mehrere Verbindungen ausgewählt aus der Gruppe der Verbindungen der Formel II;
- Das Medium enthält vorzugsweise eine oder mehrere Verbindungen ausgewählt aus der Gruppe der Verbindungen der Formeln VI-2, VII-1a, VII-1 b, IX, X, XI und XXVI (CF₂O-verbrückte Verbindungen); der Gesamtgehalt an Verbindungen der Formeln VI-2, VII-1a, VII-1b, IX, X, XI und XXVI beträgt bevorzugt 35 Gew.-% oder mehr, besonders bevorzugt 40 Gew.-% oder mehr und ganz besonders bevorzugt 45 Gew.-% oder mehr.
- Der Anteil an Verbindungen der Formeln II-XXVI im Gesamtgemisch beträgt vorzugsweise 20 bis 99 Gew.%;
- Das Medium enthält vorzugsweise 25-80 Gew.%, besonders bevorzugt 30-70 Gew.% an Verbindungen der Formel II und/oder III;
- Das Medium enthält vorzugsweise 20-70 Gew.%, besonders bevorzugt 25-60 Gew.% an Verbindungen der Formel IIa;
- Das Medium enthält vorzugsweise 2-25 Gew.%, besonders bevorzugt 3-20 Gew.% ausgewählt aus der Gruppe der Verbindungen der VI-2;
- Das Medium enthält insgesamt 2-30 Gew.%, besonders bevorzugt 3-20 Gew.% an Verbindungen der Formeln XI und XXVI zusammen;
- Das Medium enthält vorzugsweise 1-20 Gew.%, besonders bevorzugt 2-15 Gew.% an Verbindungen der Formel XXIV;
- Das Medium enthält insgesamt 15-65 Gew.%, besonders bevorzugt 30-55 Gew.% ausgewählt aus den hochpolaren Verbindungen der Formeln VI-2, X, XI und XXV zusammen.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n, m und k sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Akronym für den Grundkörper angegeben. Im Einzelfall folgt getrennt von Akronym für den Grundkörper mit einem Strich ein Code für die Substituenten R^{1*}, R^{2*} , L^{1*} und L^{2*}:

| Code für R^{1*}, R^{2*}, L^{1*} L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃. F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

**Tabelle A**

| | | | |
|---|---|---|---|
| 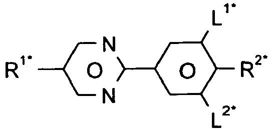 | | 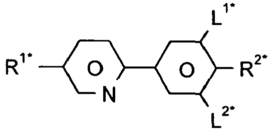 | |
| | **PYP** | | **PYRP** |
| 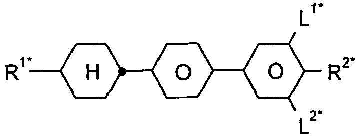 | | 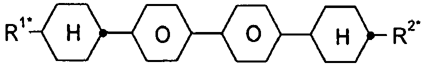 | |
| | **BCH** | | **CBC** |
| 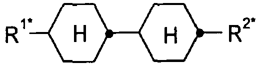 | | 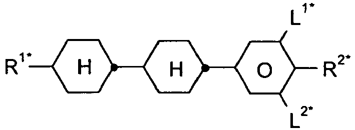 | |
| | **CCH** | | **CCP** |
| 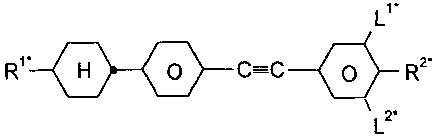 | | 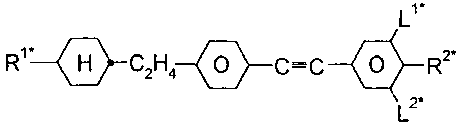 | |
| | **CPTP** | | **CEPTP** |
| 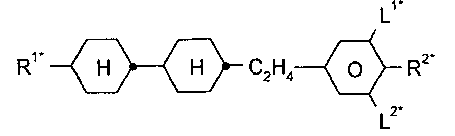 | | 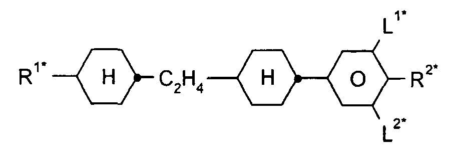 | |
| | **ECCP** | | **CECP** |
| 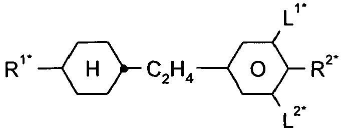 | | 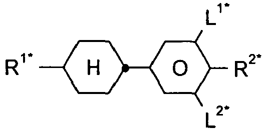 | |
| | **EPCH** | | **PCH** |
| 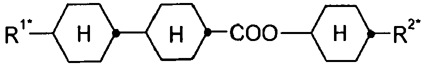 | | | |
| | **CH** | | |
| 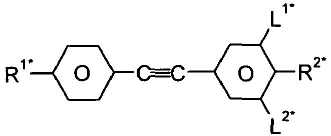 | | 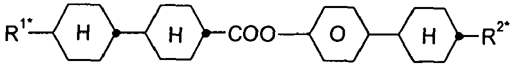 | |
| | **PTP** | | **CCPC** |
| 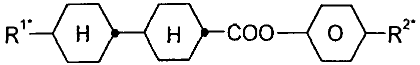 | | 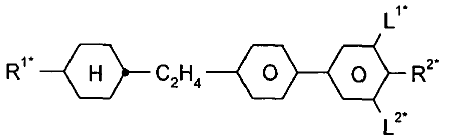 | |
| | **CP** | | **BECH** |
| 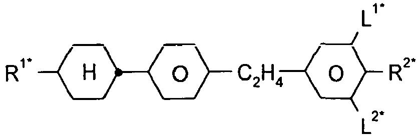 | | 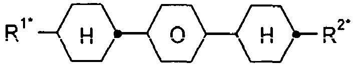 | |
| | **EBCH** | | **CPC** |
| 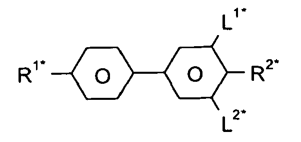 | | 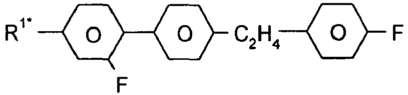 | |
| | **B** | | **FET-nF** |
| 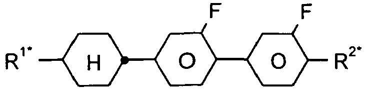 | | 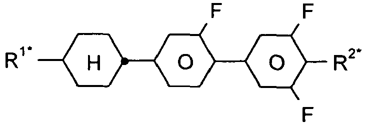 | |
| | **CGG** | | **CGU** |
| 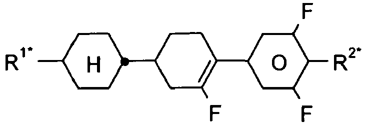 | | | |
| | **CFU** | | |

**Tabelle B**

| | | | |
|---|---|---|---|
| 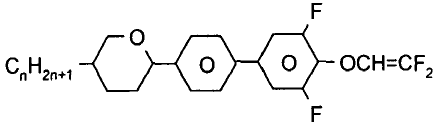 | | 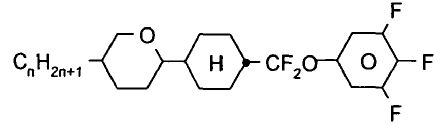 | |
| | **APU-n-OXF** | | **ACQU-n-F** |
| 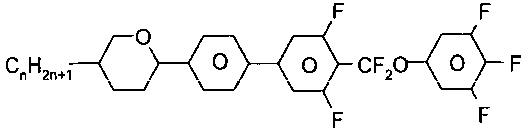 | | | |
| | **APUQU-n-F** | | |
| 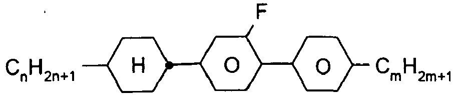 | | 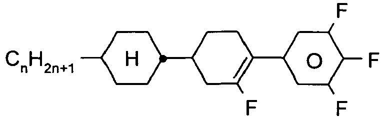 | |
| | **BCH-n.Fm** | | **CFU-n-F** |
| 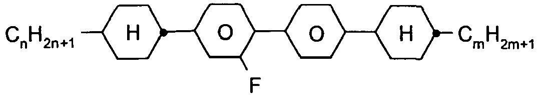 | | | |
| | **CBC-nmF** | | |
| 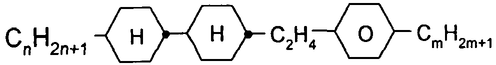 | | 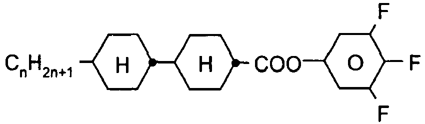 | |
| | **ECCP-nm** | | **CCZU-n-F** |
| 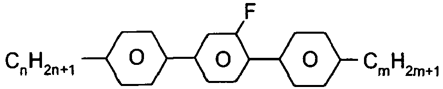 | | 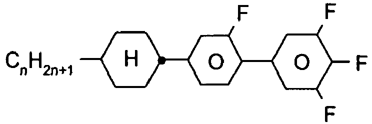 | |
| | **PGP-n-m** | | **CGU-n-F** |
| 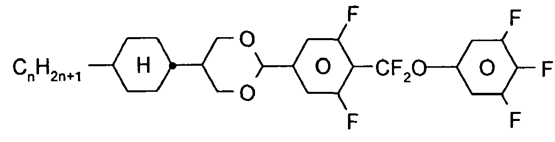 | | | |
| | **CDUQU-n-F** | | |
| 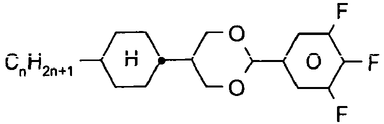 | | 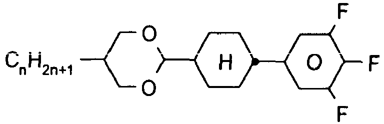 | |
| | **CDU-n-F** | | **DCU-n-F** |
| 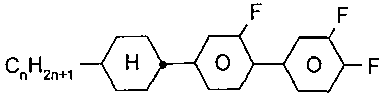 | | 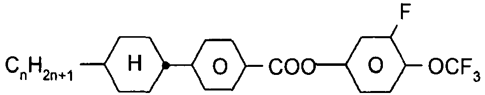 | |
| | **CGG-n-F** | | **CPZG-n-OT** |
| 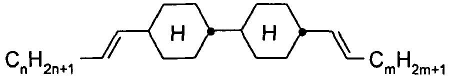 | | | |
| | **CC-nV-Vm** | | |
| 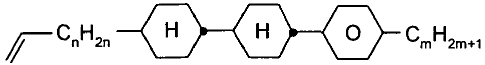 | | 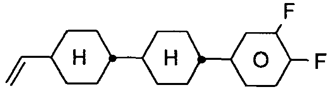 | |
| | **CCP-Vn-m** | | **CCG-V-F** |
| 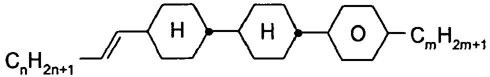 | | 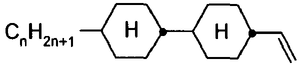 | |
| | **CCP-nV-m** | | **CC-n-V** |
| 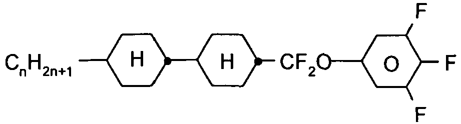 | | 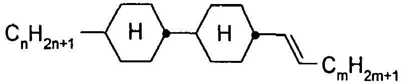 | |
| | **CCQU-n-F** | | **CC-n-Vm** |
| 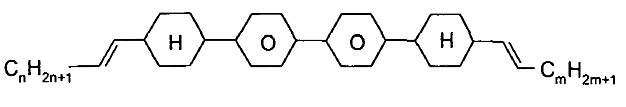 | | | |
| | **CPPC-nV-Vm** | | |
| 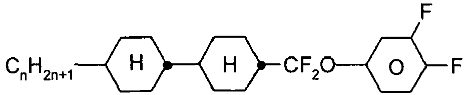 | | 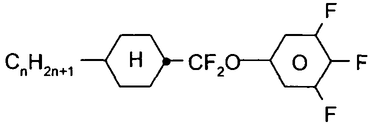 | |
| | **CCQG-n-F** | | **CQU-n-F** |
| 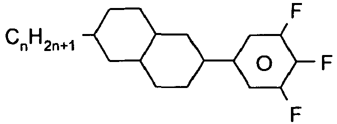 | | 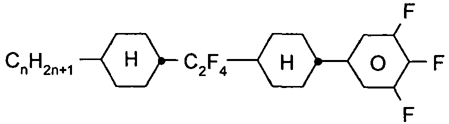 | |
| | **Dec-U-n-F** | | **CWCU-n-F** |
| 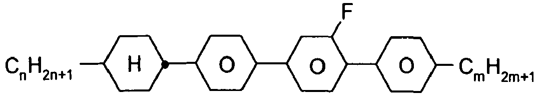 | | | |
| | **CPGP-n-m** | | |
| 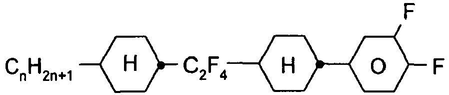 | | | |
| | **CWCG-n-F** | | |
| 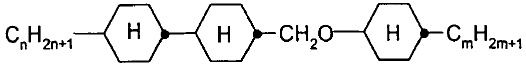 | | | |
| | **CCOC-n-m** | | |
| 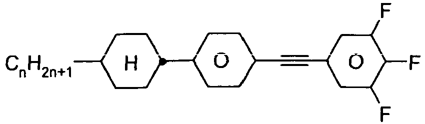 | | 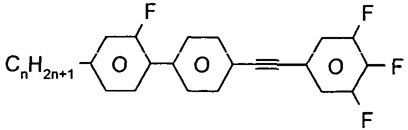 | |
| | **CPTU-n-F** | | **GPTU-n-F** |
| 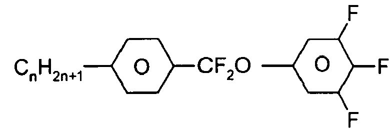 | | 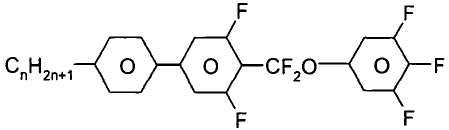 | |
| | **PQU-n-F** | | **PUQU-n-F** |
| 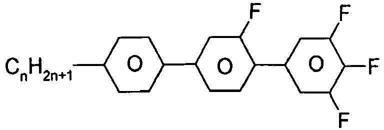 | | 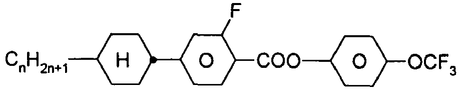 | |
| | **PGU-n-F** | | **CGZP-n-OT** |
| 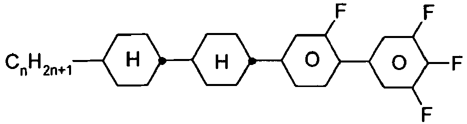 | | 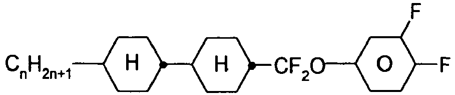 | |
| | **CCGU-n-F** | | **CCQG-n-F** |
| 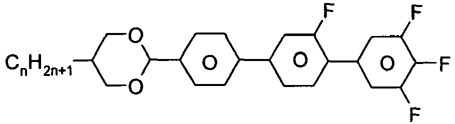 | | 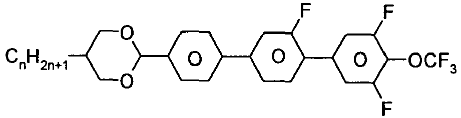 | |
| | **DPGU-n-F** | | **DPGU-n-OT** |
| 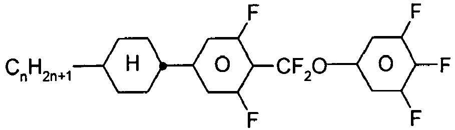 | | | |
| | **CUQU-n-F** | | |
| 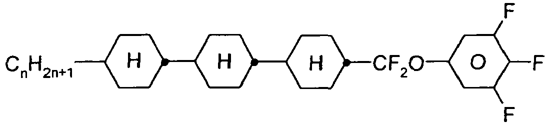 | | | |
| | **CCCQU-n-F** | | |
| 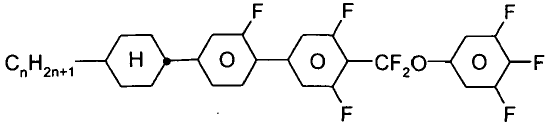 | | | |
| | **CGUQU-n-F** | | |
| 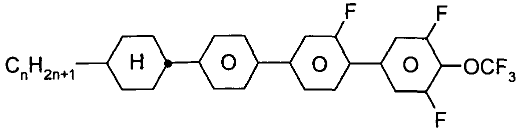 | | | |
| | **CPGU-n-OT** | | |
| 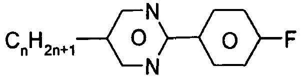 | | 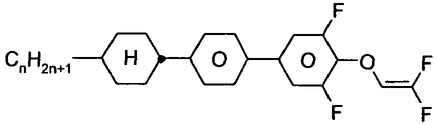 | |
| | **PYP-n-F** | | **CPU-n-OXF** |
| 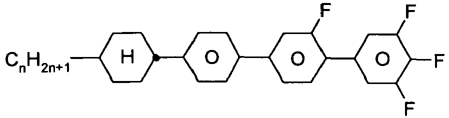 | | 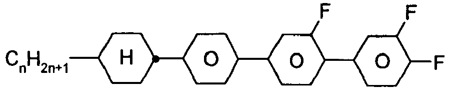 | |
| | **CPGU-n-F** | | **CPGG-n-F** |
| 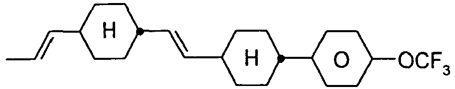 | | 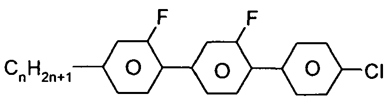 | |
| | **CVCP-1V-OT** | | **GGP-n-Cl** |
| 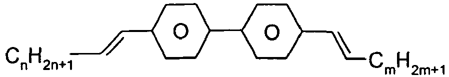 | | 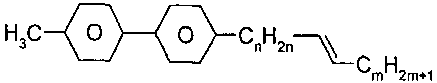 | |
| | **PP-nV-Vm** | | **PP-1-nVm** |
| 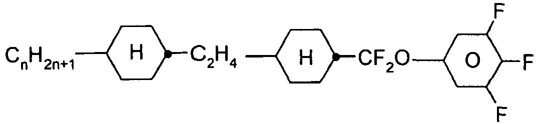 | | | |
| | **CWCQU-n-F** | | |
| 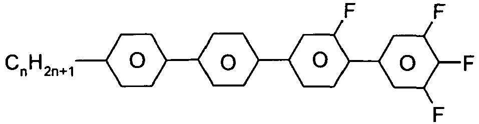 | | | |
| | **PPGU-n-F** | | |
| 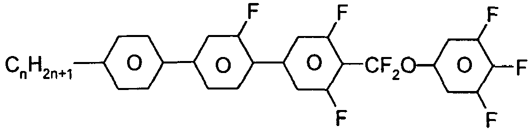 | | | |
| | **PGUQU-n-F** | | |
| 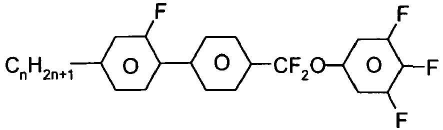 | | 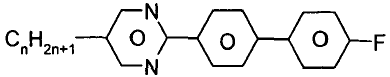 | |
| | **GPQU-n-F** | | **MPP-n-F** |
| 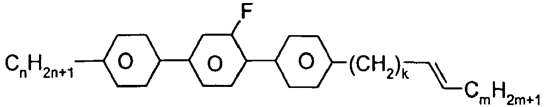 | | | |
| | **PGP-n-kVm** | | |
| 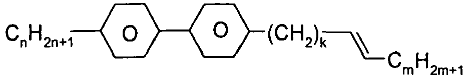 | | | |
| | **PP-n-kVm** | | |
| 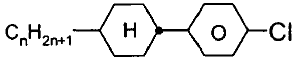 | | 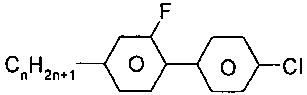 | |
| | **PCH-nCl** | | **GP-n-Cl** |
| 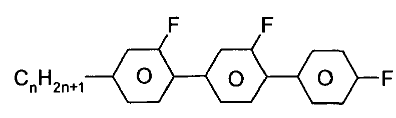 | | 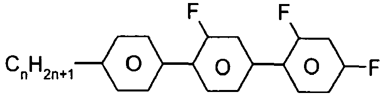 | |
| | **GGP-n-F** | | **PGIGI-n-F** |
| 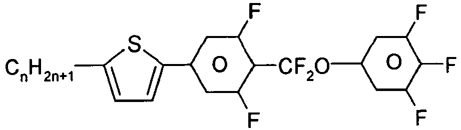 | | | |
| | **SUQU-n-F** | | |
| 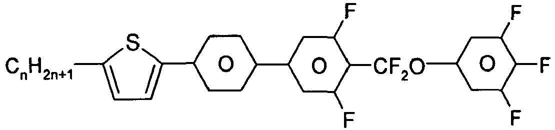 | | | |
| | **SPUQU-n-F** | | |

In einer bevorzugten Ausführungsform der vorliegenden Erfindung enthalten die erfindungsgemäßen LC-Medien eine oder mehrere Verbindungen ausgewählt aus der Guppe bestehend aus Verbindungen der Tabelle A und B.

**Tabelle C**

| In der Tabelle C werden mögliche chirale Dotierstoffe angegeben, die den erfindungsgemäßen FK-Medien zugesetzt werden können. | | | |
|---|---|---|---|
| 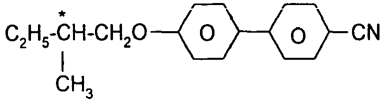 | | 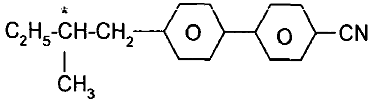 | |
| | **C15** | | **CB 15** |
| 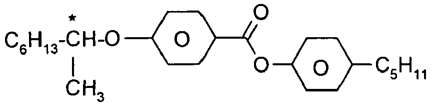 | | 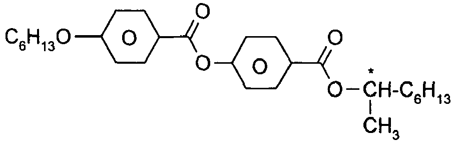 | |
| | **CM 21** | | **R/S-811** |
| 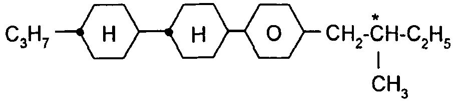 | | 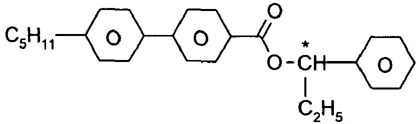 | |
| | **CM 44** | | **CM 45** |
| 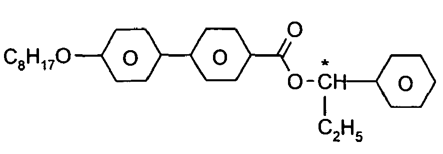 | | 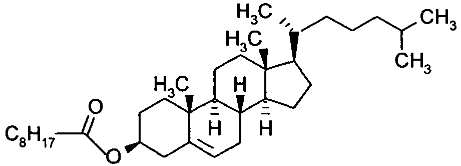 | |
| | **CM 47** | | **CN** |
| 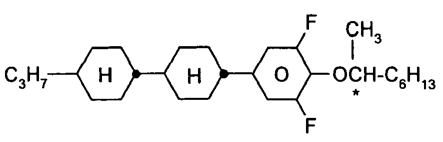 | | 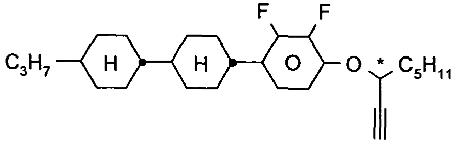 | |
| | **R/S-2011** | | **R/S-3011** |
| 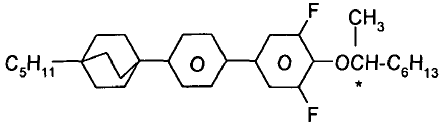 | | 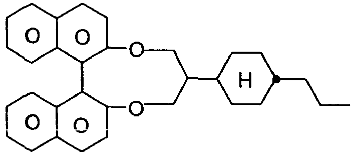 | |
| | **R/S-4011** | | **R/S-5011** |
| 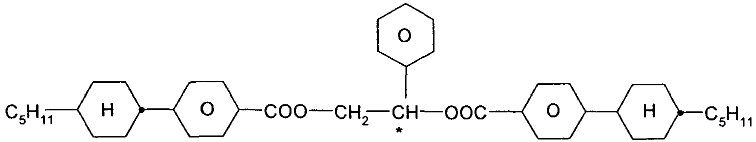 | | | |
| | **R/S-1011** | | |

Optional enthalten die FK-Medien 0 bis 10 Gew.%, insbesondere 0,01 bis 5 Gew.%, besonders bevorzugt 0,1 bis 3 Gew.% an Dotierstoffen, vorzugsweise ausgewählt aus der Gruppe bestehend aus Verbindungen der Tabelle C.

**Tabelle D**

| In der Tabelle D werden mögliche Stabilisatoren angegeben, die den erfindungsgemäßen FK-Medien zugesetzt werden können. (n bedeutet hier eine ganze Zahl von 1 bis 12, vorzugsweise 1, 2, 3, 4, 5, 6, 7 oder 8, endständige Methylgruppen sind nicht gezeigt). | |
|---|---|
| 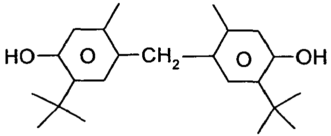 | 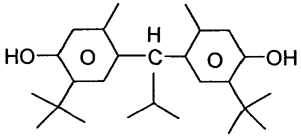 |
| 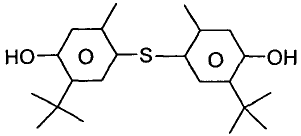 | 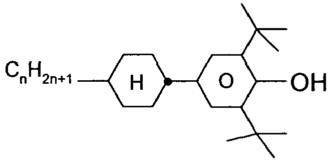 |
| 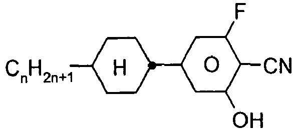 | 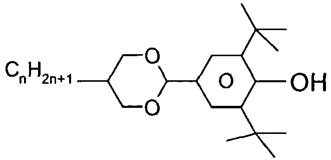 |
| 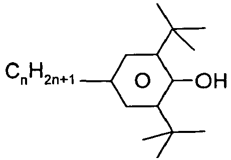 | 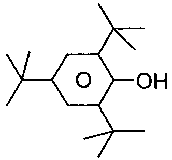 |
| 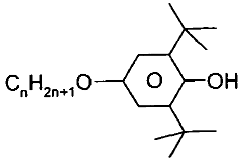 | 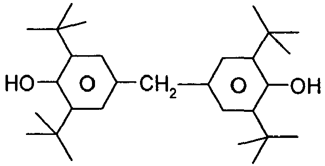 |
| 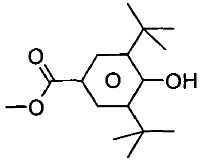 | 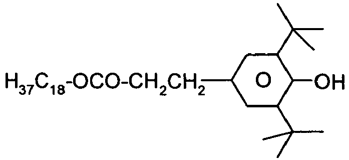 |
| 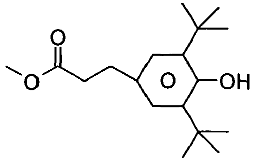 | 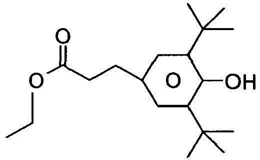 |
| 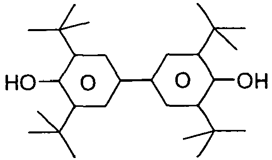 | 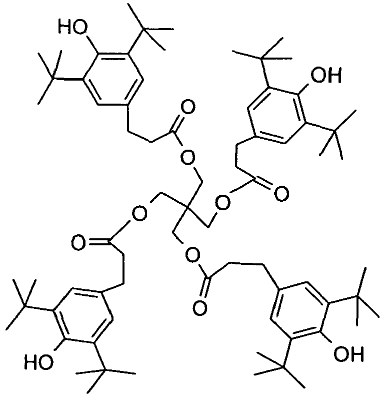 |
| 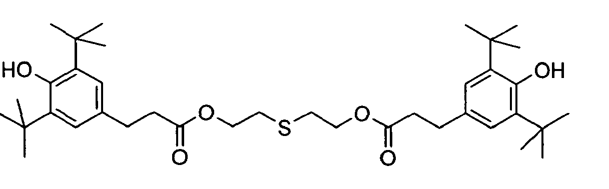 | |
| 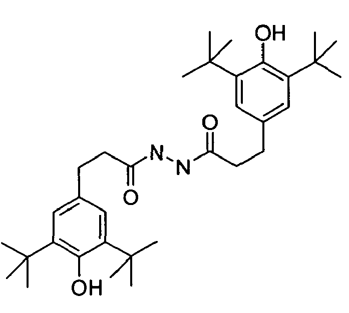 | 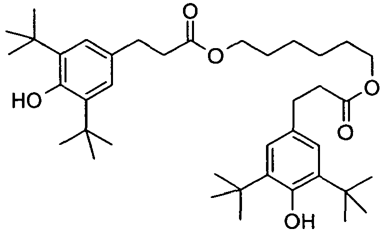 |
| 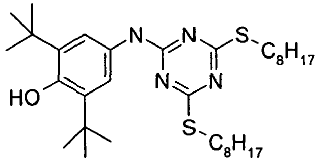 | 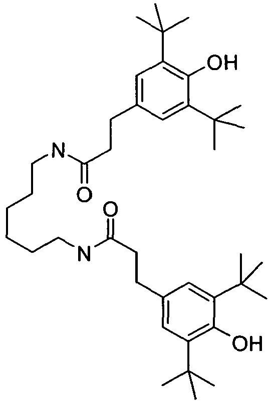 |
| 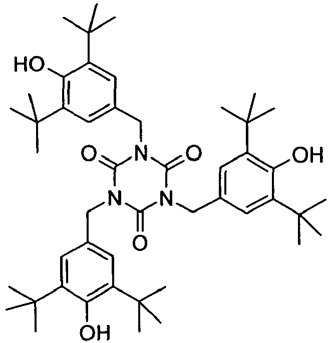 | 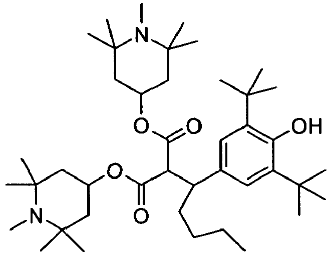 |
| 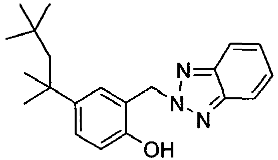 | 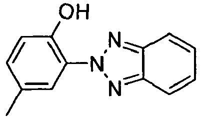 |
| 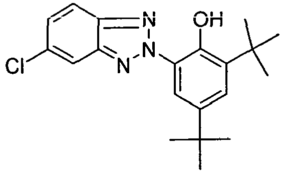 | 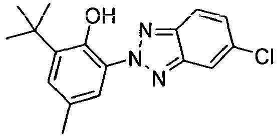 |
| 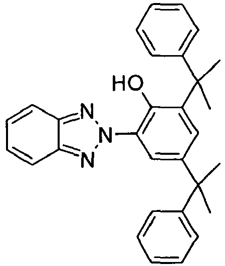 | 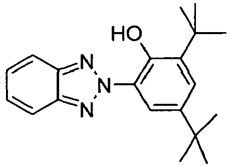 |
| 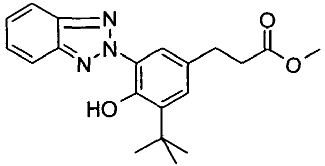 | 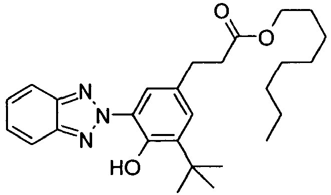 |
| 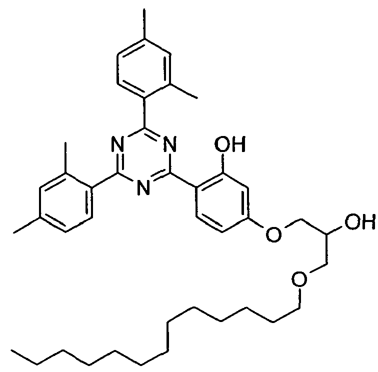 | 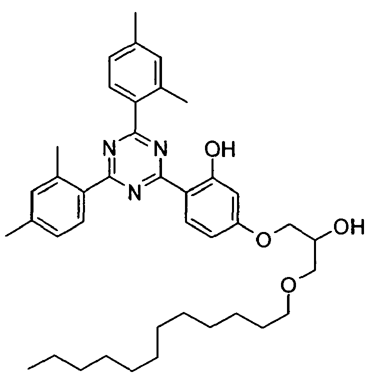 |
| 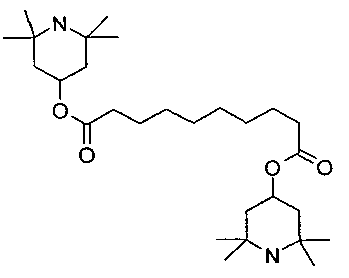 | 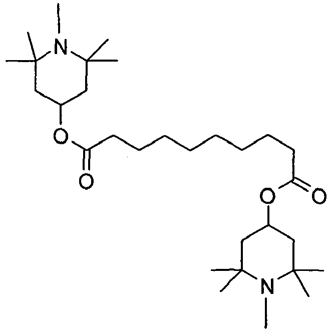 |

Vorzugsweise enthalten die FK-Medien 0 bis 10 Gew.%, insbesondere 1ppm bis 5 Gew.%, besonders bevorzugt 1ppm bis 1 Gew.% an Stabilisatoren. Vorzugsweise enthalten die FK-Medien einen oder mehrere Stabilisatoren ausgewählt aus der Gruppe bestehend aus Verbindungen der Tabelle D.

**Tabelle E**

| In der Tabelle E sind Beispiel FK-Medien gemäß der vorlie Verbindungen verwendet we Verbindungen zusammengestellt, die in den genden Erfindung vorzugsweise als reaktive rden können. | | | |
|---|---|---|---|
| 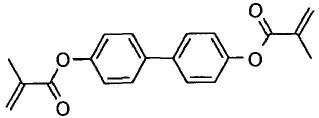 | 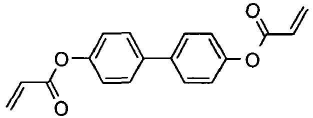 | | |
| **RM-1** | **RM-2** | | |
| 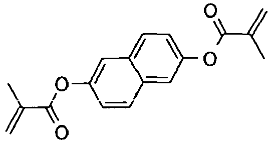 | 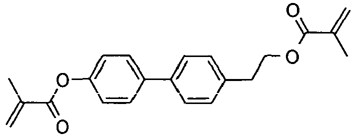 | | |
| **RM-3** | **RM-4** | | |
| 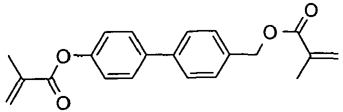 | | 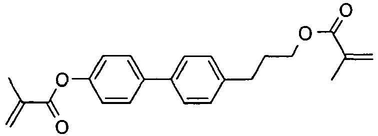 | |
| | **RM-5** | | **RM-6** |
| 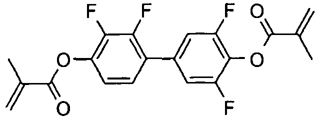 | | 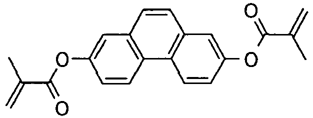 | |
| | **RM-7** | | **RM-8** |
| 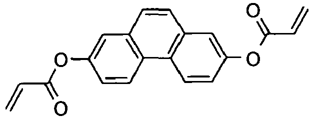 | | 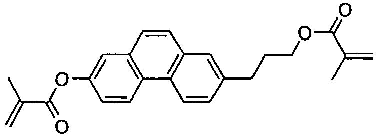 | |
| | **RM-9** | | **RM-10** |
| 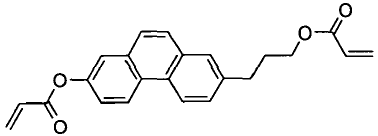 | | 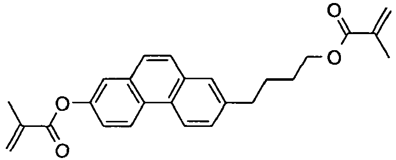 | |
| | **RM-11** | | **RM-12** |
| 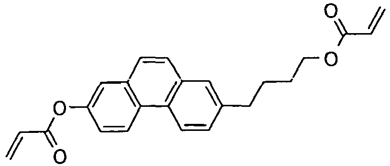 | | | |
| | **RM-13** | | |
| 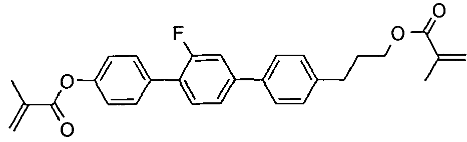 | | | |
| | **RM-14** | | |
| 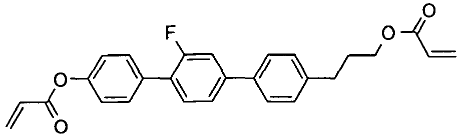 | | | |
| | **RM-15** | | |
| 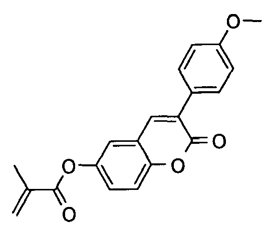 | | 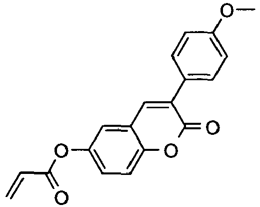 | |
| | **RM-16** | | **RM-17** |
| 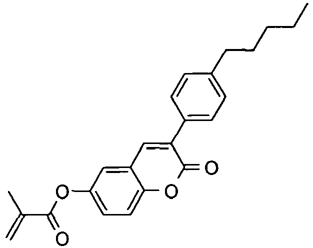 | | 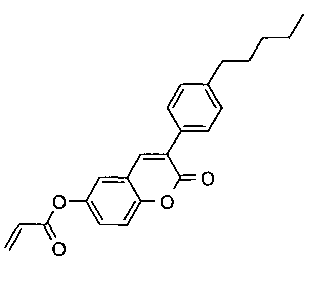 | |
| | **RM-18** | | **RM-19** |
| 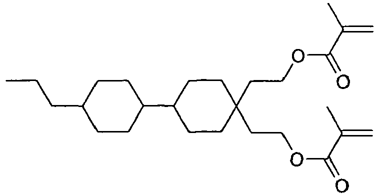 | | 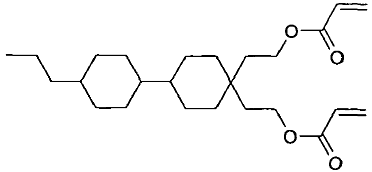 | |
| | **RM-20** | | **RM-21** |
| 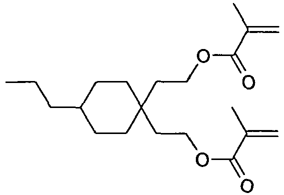 | | | |
| | **RM-22** | | |
| 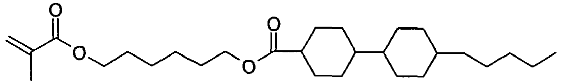 | | | |
| | **RM-23** | | |
| 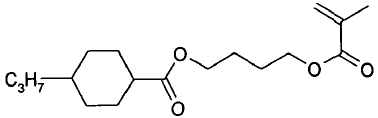 | | | |
| | **RM-24** | | |
| 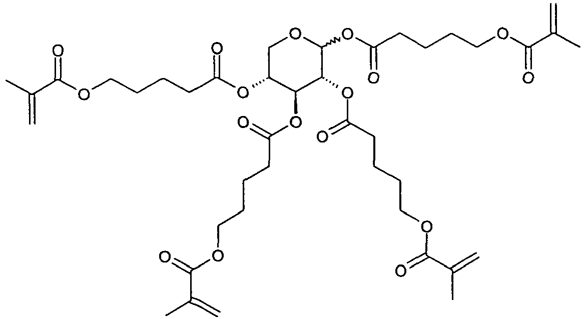 | | | |
| | **RM-25** | | |
| 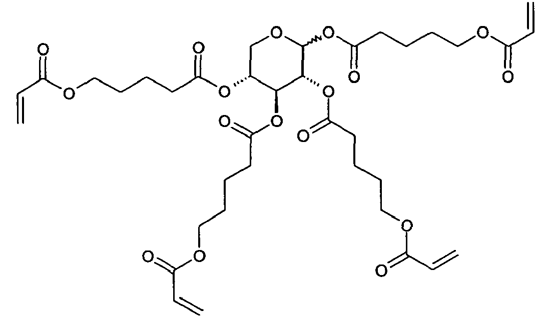 | | | |
| | **RM-26** | | |
| 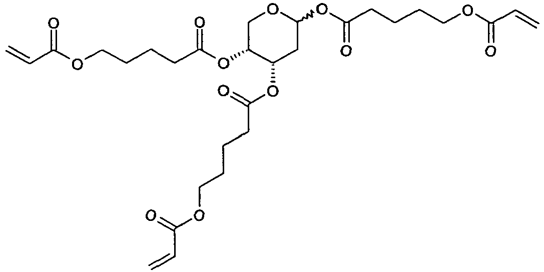 | | | |
| | **RM-27** | | |
| 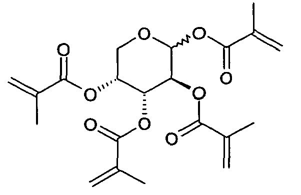 **RM-28** | | | |

In einer bevorzugten Ausführungsform der vorliegenden Erfindung enthalten die mesogenen Medien eine oder mehrere Verbindungen ausgewählt aus der Gruppe der Verbindungen der Tabelle E.

In der vorliegenden Anmeldung bedeutet der Begriff "Verbindungen", auch geschrieben als "Verbindung(en)", sofern nicht explizit anders angegeben, sowohl eine als auch mehrere Verbindungen. Umgekehrt schließt der Begriff "Verbindung" generell auch mehrere Verbindungen ein, sofern dies laut Definition möglich und nicht anders angegeben ist. Gleiches gilt für die Begriffe FK-Medien und FK-Medium. Der Begriff "Komponente" umfasst jeweils eine oder mehrere Stoffe, Verbindungen und/oder Teilchen.

Außerdem werden folgende Abkürzungen und Symbole verwendet:
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε_{⊥}: dielektrische Permittivität senkrecht zum Direktor bei 20°C und 1 kHz,
- ε_{||}: dielektrische Permittivität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN].

Soweit nicht explizit anders vermerkt, sind in der vorliegenden Anmeldung alle Konzentrationen in Gewichtsprozent angegeben und beziehen sich auf die entsprechende Gesamtmischung, enthaltend alle festen oder flüssigkristallinen Komponenten, ohne Lösungsmittel.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Die polymerisierbaren Verbindungen werden in der Anzeige bzw. Testzelle durch Bestrahlung mit UVA-Licht (üblicherweise 365nm) einer definierten Intensität für eine vorgegebene Zeit polymerisiert, wobei optional gleichzeitig eine Spannung an die Anzeige angelegt wird (üblicherweise 10 bis 30 V Wechselstrom, 1 kHz). In den Beispielen wird, falls nicht anders angegeben, eine Quecksilberdampflampe mit 100 mW/cm² verwendet, die Intensität wird mit einem Standard-UV-Meter (Fabrikat Ushio UNI meter) gemessen, der mit einem Bandpassfilter bei 320 nm ausgerüstet ist.

Die folgenden Beispiele erläutern die vorliegende Erfindung, ohne sie in irgendeiner Weise beschränken zu sollen. Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Weitere Kombinationen der Ausführungsformen und Varianten der Erfindung gemäß der Beschreibung ergeben sich auch aus den Ansprüchen.

### Beispiele

Die eingesetzten Verbindungen, soweit nicht kommerziell erhältlich, werden nach Standard-Laborvorschriften synthetisiert. FK-Medien stammen von der Merck KGaA, Deutschland. PSS-1 (PSS-[3-(2-Aminoethyl)-amino]propyl-Heptaisobutyl substituted; CAS Registry-Nr. 444315-16-6) wurde von Aldrich bezogen. Die Strukturen PSS-1 bis PSS-9 und RM-1 sind der vorausgehenden Beschreibung zu entnehmen.

### Beispiel 1

Zu einem nematischen FK-Medium (Δε > 0) gemäß Tabelle 1 werden eine polymerisierbare Verbindung (RM-1, 1,0 Gew.%) und die Diaminverbindung PSS-1 (0,25 Gew.%) zugesetzt und homogenisiert.

**Tabelle 1: Nematisches FK-Medium**

| | | | |
|---|---|---|---|
| PGU-2-F | 3,5 % | Kp. | + 77,0 |
| PGU-3-F | 7,0 % | Δn | 0,105 |
| CC-3-V1 | 15,0 % | Δε | 7,2 |
| CC-4-V | 18,0 % | ε_{\|\|} | 10,3 |
| CC-5-V | 20,0 % | K₃/K₁ | 0,88 |
| CCP-V-1 | 6,0 % | γ₁ | 63 |
| APUQU-3-F | 15,0 % | | |
| PUQU-3-F | 5,5, % | | |
| PGP-2-4 | 3,0 % | | |
| BCH-32 | 7,0 % | | |

Verwendung in Testzellen ohne Vororientierungsschicht ('alignment layer'):
Die entstandene Mischung wird in eine Testzelle gefüllt (ohne Polyimid-Orientierungsschicht, Schichtdicke d ≈ 10 µm, auf einer Substratoberfläche angeordnete ITO-Interdigitalelektroden, Glas auf der gegenüberliegenden Substratfläche, ohne Passivierungsschicht). Das FK-Medium weist eine spontane homöotrope (vertikale) Orientierung zu den Substratoberflächen auf. Unter Anlegen einer Spannung (5V) wird die Zelle 6 min mit UV-Licht der Intensität 100 mW/cm² bestrahlt. Dadurch erfolgt Polymerisation der monomeren Verbindung und der'pre-tilt' (engl.) der Zelle lässt sich ändern. Diese Orientierung bleibt bis 70 °C stabil. Im temperaturstabilen Bereich lässt sich die Zelle durch Anlegen einer Spannung zwischen 0 und 50 V reversibel schalten.

### Beispiel 2

Zu einem nematischen FK-Medium gemäß Tabelle 1 wird nur die zuvor verwendete Diaminverbindung PSS-1 (0,25 Gew.%) zugesetzt und homogenisiert.
Verwendung in Testzellen ohne Vororientierungsschicht ('alignment layer'): Die entstandene Mischung wird in eine Testzelle gefüllt (ohne Polyimid-Orientierungsschicht, Schichtdicke d ≈ 10 µm, auf einer Substratoberfläche angeordnete ITO-Interdigitalelektroden, Glas auf der gegenüberliegenden Substratfläche, ohne Passivierungsschicht). Das FK-Medium weist eine spontane homöotrope (vertikale) Orientierung zu den Substratoberflächen auf.

Die bei Raumtemperatur beobachtete homöotrope Vororientierung verschwindet ab einer Temperatur von ca. 45 °C oder mehr. Eine planare Orientierung wird erhalten. Die Zelle ist weiter schaltbar, aber nicht mehr als VA-IPS-, sondern als IPS-Schaltvorgang.

## Patentansprüche

1. FK-Medium enthaltend eine niedermolekulare flüssigkristalline Komponente mit einer positiven dielektrischen Anisotropie vom Wert Δε ≥ 1,5 und eine Komponente (N) enthaltend Teilchen mit einer Masse von mindestens 450 Da, wobei die Teilchen durch eine oder mehrere organische polare Ankergruppen funktionalisiert sind und die Ankergruppen ein oder mehrere Heteroatome ausgewählt aus den Elementen N, O, S und P umfassen.

2. FK-Medium nach Anspruch 1, **dadurch gekennzeichnet, dass** es eine polymerisierbare oder eine polymerisierte Komponente enthält, wobei die polymerisierte Komponente erhältlich ist durch Polymerisation einer polymerisierbaren Komponente.

3. FK-Medium nach Anspruch 1 oder 2, **dadurch gekennzeichnet, dass** die Komponente (N) aus gelösten oder dispergierten Teilchen besteht.

4. FK-Medium nach einem oder mehreren der Ansprüche 1 bis 3, **dadurch gekennzeichnet, dass** die Teilchen der Komponente (N) ein Seitenverhältnis dₘₐₓ/dₘᵢₙ von höchstens 3:1 besitzen.

5. FK-Medium nach einem oder mehreren der Ansprüche 1 bis 4, **dadurch gekennzeichnet, dass** die Teilchen der Komponente (N) organische Moleküle sind.

6. FK-Medium nach einem oder mehreren der Ansprüche 1 bis 5 **dadurch gekennzeichnet, dass** die Teilchen der Komponente (N) organisch/anorganische Hybrid-Teilchen sind.

7. FK-Medium nach einem oder mehreren der Ansprüche 1 bis 6, **dadurch gekennzeichnet, dass** die Komponente (N) Silsesquioxanverbindungen umfasst.

8. FK-Medium nach einem oder mehreren der Ansprüche 1 bis 7 **dadurch gekennzeichnet, dass** die Teilchen der Komponente (N) durch eine oder mehrere Ankergruppen umfassend neben einem Kohlenwasserstoffgerüst mindestens ein oder mehrere Heteroatome, ausgewählt aus den Elementen N, O und S in Strukturelementen ausgewählt aus -NH₂, -NH-, tert-N (tertiäres Amin), =N-, -OH, -SH, -CN, -(CO)-, -O-, -S- und Kombinationen aus zwei oder mehreren dieser Gruppen, funktionalisiert sind.

9. FK-Medium nach einem oder mehreren der Ansprüche 1 bis 7, **dadurch gekennzeichnet, dass** die Komponente (N) durch eine Ankergruppe umfassend eine Gruppe der Teilformel -Sp-[_{X}²-Z²-]ₖX¹ (A1)
funktionalisiert ist, worin jeweils unabhängig
Sp eine Abstandsgruppe oder eine Einfachbindung, über die eine Verbindung zum Teilchen hergestellt wird,
X¹ eine Gruppe -NH₂, -NHR¹ -NR¹₂, -CN, -OR¹, -OH, -(CO)OH, oder eine Gruppe der Formeln 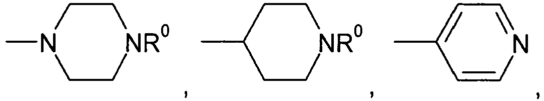 oder 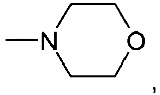
R⁰ H oder Alkyl mit 1 bis 12 C-Atomen,
X² jeweils unabhängig -NH-, -NR¹-, -O- oder eine Einfachbindung
Z² jeweils unabhängig eine Alkylengruppe mit 1-15 C-Atomen, carbocyclische Ringe mit 5 oder 6 C-Atomen, oder Kombinationen aus einem oder mehreren Ringen und Alkylengruppen, worin jeweils ein oder mehrere Wasserstoffatome durch -OH, OR¹, -NH₂, -NHR¹-, -NR¹₂, oder Halogen (bevorzugt F, Cl) ersetzt sein kann
R¹ jeweils unabhängig einen halogenierten oder unsubstituierten Alkylrest mit 1 bis 15 C-Atomen, wobei in diesem Rest auch eine oder mehrere CH₂-Gruppen jeweils unabhängig voneinander durch -C≡C-, -CH=CH-, -(CO)O-, -O(CO)-, -(CO)- oder -O- so ersetzt sein können, dass O-und N-Atome nicht direkt miteinander verknüpft sind,
und wobei die Gruppen R¹ miteinander zu Ringsystemen verknüpft sein können, und
k 0 bis 3
bedeuten.

10. FK-Medium nach einem oder mehreren der Ansprüche 1 bis 9, **dadurch gekennzeichnet, dass** die Teilchen der Komponente (N) jeweils genau eine Ankergruppe aufweisen.

11. FK-Medium nach einem oder mehreren der Ansprüche 1 bis 10, **dadurch gekennzeichnet, dass** es die Teilchen der Komponente (N) in einer Konzentration von weniger als 10 Gew.-% enthält.

12. FK-Medium nach einem oder mehreren der Ansprüche 2 bis 11, **dadurch gekennzeichnet, dass** die polymerisierbare Komponente eine Verbindung der Formel I umfasst:
P^{a}-(Sp^{a})ₛ₁-A²-(Z¹-A¹)ₙ-(Sp^{b})ₛ₂-P^{b}
worin die einzelnen Reste folgende Bedeutung besitzen:
P^{a}, P^{b} jeweils unabhängig voneinander eine polymerisierbare Gruppe,
Sp^{a}, Sp^{b} bei jedem Auftreten gleich oder verschieden eine Abstandsgruppe,
s1, s2 jeweils unabhängig voneinander 0 oder 1,
A¹, A² jeweils unabhängig voneinander einen Rest ausgewählt aus folgenden Gruppen
a) der Gruppe bestehend aus trans-1,4-Cyclohexylen, 1,4-Cyclohexenylen und 4,4'-Bicyclohexylen, worin auch eine oder mehrere nicht benachbarte CH₂-Gruppen durch -O-und/oder -S- ersetzt sein können und worin auch ein oder mehrere H-Atome durch F ersetzt sein können,
b) der Gruppe bestehend aus 1,4-Phenylen und 1,3-Phenylen, worin auch eine oder zwei CH-Gruppen durch N ersetzt sein können und worin auch ein oder mehrere H-Atome durch L ersetzt sein können,
c) der Gruppe bestehend aus Tetrahydropyran-2,5-diyl, 1,3-Dioxan-2,5-diyl, Tetrahydrofuran-2,5-diyl, Cylcobut-1,3-diyl, Piperidin-1,4-diyl, Thiophen-2,5-diyl und Selenophen-2,5-diyl, welche auch ein oder mehrfach durch L substituiert sein können,
d) der Gruppe bestehend aus gesättigten, teilweise ungesättigten oder vollständig ungesättigten, und optional substituierten, polycyclischen Resten mit 5 bis 20 cyclischen C-Atomen, von denen auch eines oder mehrere durch Heteroatome ersetzt sein können, vorzugsweise ausgewählt aus der Gruppe bestehend aus Bicyclo[1.1.1]pentan-1,3-diyl, Bicyclo[2.2.2]octan-1,4-diyl, Spiro[3.3]heptan-2,6-diyl, 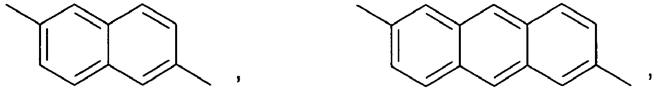 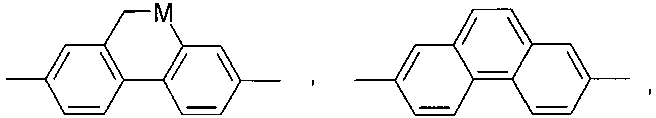 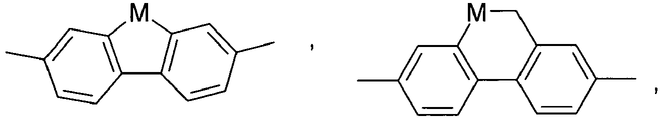 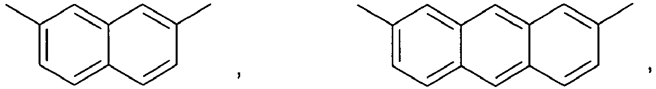 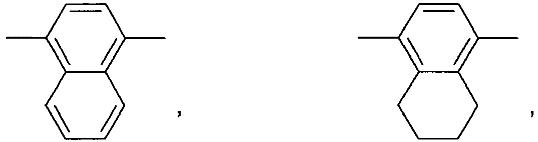 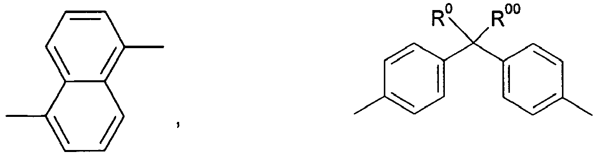 wobei in diesen Resten auch ein oder mehrere H- Atome durch L ersetzt sein können, und/oder eine oder mehrere Doppelbindungen durch Einfachbindungen ersetzt sein können, und/oder ein oder mehrere CH-Gruppen durch N ersetzt sein können,
n 0, 1, 2 oder 3,
Z¹ jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist, -O-, -CO-, -C(R^{y}R^{z})-, -CH₂CF₂-, -CF₂CF₂-, oder eine Einfachbindung,
L bei jedem Auftreten gleich oder verschieden F, Cl, CN, SCN, SF₅ oder geradkettiges oder verzwiegtes, jeweils optional fluoriertes, Alkyl, Alkoxy, Alkylcarbonyl, Alkoxycarbonyl, Alkylcarbonyloxy oder Alkoxycarbonyloxy mit 1 bis 12 C-Atomen,
R⁰, R⁰⁰ jeweils unabhängig voneinander H, F oder geradkettiges oder verzweigtes Alkyl mit 1 bis 12 C-Atomen, worin auch ein oder mehrere H-Atome durch F ersetzt sein können,
M -O-, -S-, -CH₂-, -CHY¹- oder -CY¹Y²-, und
Y¹ und Y² jeweils unabhängig voneinander eine der oben für R⁰ angegebenen Bedeutungen, Cl oder CN.

13. FK-Medium nach einem oder mehreren der Ansprüche 1 bis 12, **dadurch gekennzeichnet, dass** die Komponente (N) Teilchen umfasst, die eine oder mehrere polymerisierbare Gruppen aufweisen.

14. FK-Anzeige enthaltend eine FK-Zelle mit zwei Substraten und mindestens zwei Elektroden, wobei mindestens ein Substrat lichtdurchlässig ist und mindestens ein Substrat ein oder zwei Elektroden aufweist, sowie einer zwischen den Substraten befindlichen Schicht eines FK-Mediums nach einem oder mehreren der Ansprüche 1 bis 13,
wobei die Komponente (N) geeignet ist, eine homöotrope Ausrichtung des FK-Mediums gegenüber den Substratoberflächen herbeizuführen.

15. FK-Anzeige nach Anspruch 14, **dadurch gekennzeichnet, dass** die Substrate keine Orientierungsschichten aufweisen.

16. FK-Anzeige nach Anspruch 14 oder 15, **dadurch gekennzeichnet, dass** es sich um eine VA-Anzeige mit auf einer oder beiden Seiten der FK-Zelle angeordneten Interdigital-Elektroden handelt.

17. Verfahren zu Herstellung eines FK-Mediums nach einem oder mehreren der Ansprüche 1 bis 13, **dadurch gekennzeichnet, dass** man eine niedermolekulare flüssigkristalline Komponente mit einer positiven dielektrischen Anisotropie vom Wert Δε ≥ 1,5 und eine Komponente (N) enthaltend Teilchen mit einer Masse von mindestens 450 Da, wobei die Teilchen durch eine oder mehrere organische polare Ankergruppen funktionalisiert sind und die Ankergruppen ein oder mehrere Heteroatome ausgewählt aus den Elementen N, O, S und P umfassen, mischt und optional polymerisierbare Verbindungen und/oder Hilfsstoffe zugibt.

## Claims

1. LC medium comprising a low-molecular-weight liquid-crystalline component having positive dielectric anisotropy with a value Δε ≥ 1.5 and a component (N) comprising particles having a mass of at least 450 Da, where the particles have been functionalised by one or more organic polar anchor groups and the anchor groups contain one or more heteroatoms selected from the elements N, O, S and P.

2. LC medium according to Claim 1, **characterised in that** it comprises a polymerisable or polymerised component, where the polymerised component is obtainable by polymerisation of a polymerisable component.

3. LC medium according to Claim 1 or 2, **characterised in that** component (N) consists of dissolved or dispersed particles.

4. LC medium according to one or more of Claims 1 to 3, **characterised in that** the particles of component (N) have a side ratio dₘₐₓ/dₘᵢₙ of at most 3:1.

5. LC medium according to one or more of Claims 1 to 4, **characterised in that** the particles of component (N) are organic molecules.

6. LC medium according to one or more of Claims 1 to 5, **characterised in that** the particles of component (N) are organic/inorganic hybrid particles.

7. LC medium according to one or more of Claims 1 to 6, **characterised in that** component (N) comprises silsesquioxane compounds.

8. LC medium according to one or more of Claims 1 to 7, **characterised in that** the particles of component (N) have been functionalised by one or more anchor groups containing, besides a hydrocarbon skeleton, at least one or more heteroatoms selected from the elements N, O and S in structural elements selected from -NH₂, -NH-, tert-N (tertiary amine), =N-, -OH, -SH, -CN, -(CO)-, -O-, -S- and combinations of two or more of these groups.

9. LC medium according to one or more of Claims 1 to 7, **characterised in that** component (N) has been functionalised by an anchor group containing a group of the sub-formula
-Sp-[_{X}²-Z²-]ₖX¹ (A1),
in which, in each case independently,
Sp denotes a spacer group or a single bond via which a connection to the particle is established,
X¹ denotes a group -NH₂, -NHR¹, -NR¹₂, -CN, -OR¹, -OH, -(CO)OH, or a group of the formula 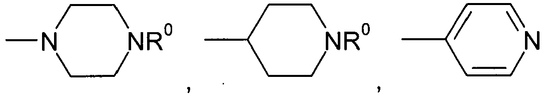 or 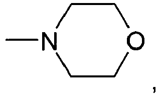
R⁰ denotes H or alkyl having 1 to 12 C atoms,
X², in each case independently, denotes -NH-, -NR¹, -O- or a single bond,
Z², in each case independently, denotes an alkylene group having 1-15 C atoms, carbocyclic rings having 5 or 6 C atoms, or combinations of one or more rings and alkylene groups, in each of which one or more hydrogen atoms may be replaced by -OH, OR¹, -NH₂, -NHR¹-, -NR¹₂ or halogen (preferably F, Cl),
R¹, in each case independently, denotes a halogenated or unsubstituted alkyl radical having 1 to 15 C atoms, where, in addition, one or more CH₂ groups in this radical may each be replaced, independently of one another, by -C≡C-, -CH=CH-, -(CO)O-, -O(CO)-, -(CO)- or -O- in such a way that O and N atoms are not linked directly to one another, and where the groups R¹ may be linked to one another to form ring systems, and
k denotes 0 to 3.

10. LC medium according to one or more of Claims 1 to 9, **characterised in that** the particles of component (N) each have precisely one anchor group.

11. LC medium according to one or more of Claims 1 to 10, **characterised in that** it comprises the particles of component (N) in a concentration of less than 10% by weight.

12. LC medium according to one or more of Claims 2 to 11, **characterised in that** the polymerisable component comprises a compound of the formula I:
p^{a}-(Sp^{a})ₛ₁-A²-(Z¹-A¹)n-(SP^{b})ₛ₂-P^{b}
in which the individual radicals have the following meanings:
P^{a}, P^{b} each, independently of one another, denote a polymerisable group,
Sp^{a}, Sp^{b} on each occurrence, identically or differently, denote a spacer group,
s1, s2 each, independently of one another, denote 0 or 1,
A¹, A² each, independently of one another, denote a radical selected from the following groups:
a) the group consisting of trans-1,4-cyclohexylene, 1,4-cyclo-hexenylene and 4,4'-bicyclohexylene, in which, in addition, one or more non-adjacent CH₂ groups may be replaced by -O- and/or -S- and in which, in addition, one or more H atoms may be replaced by F,
b) the group consisting of 1,4-phenylene and 1,3-phenylene, in which, in addition, one or two CH groups may be replaced by N and in which, in addition, one or more H atoms may be replaced by L,
c) the group consisting of tetrahydropyran-2,5-diyl, 1,3-dioxane-2,5-diyl, tetrahydrofuran-2,5-diyl, cyclobutane-1,3-diyl, piperidine-1,4-diyl, thiophene-2,5-diyl and selenophene-2,5-diyl, each of which may also be mono- or polysubstituted by L,
d) the group consisting of saturated, partially unsaturated or fully unsaturated, and optionally substituted, polycyclic radicals having 5 to 20 cyclic C atoms, one or more of which may, in addition, be replaced by heteroatoms, preferably selected from the group consisting of bicyclo[1.1.1]pentane-1,3-diyl, bicyclo[2.2.2]octane-1,4-diyl, spiro[3.3]heptane-2,6-diyl, 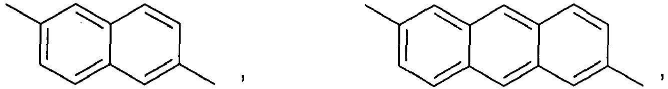 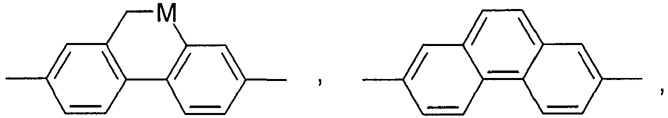 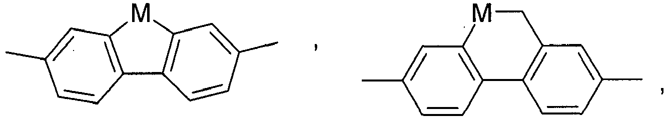 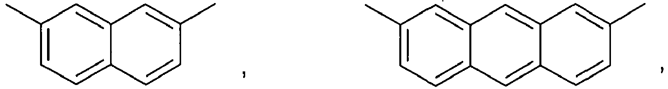 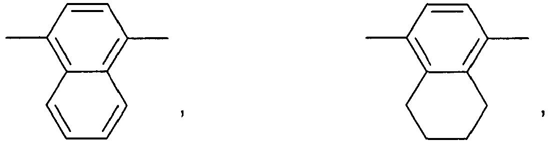 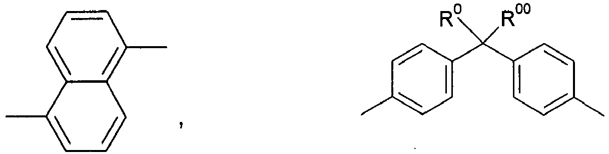 where, in addition, one or more H atoms in these radicals may be replaced by L, and/or one or more double bonds may be replaced by single bonds, and/or one or more CH groups may be replaced by N,
n denotes 0, 1, 2 or 3,
Z¹ in each case, independently of one another, denotes -CO-O-, -O-CO-, -CH₂O-, -OCH₂-, -CF₂O-, -OCF₂-, or -(CH₂)ₙ-, where n is 2, 3 or 4, -O-, -CO-, -C(R^{Y}R^{Z})-, -CH₂CF₂-, -CF₂CF₂- or a single bond,
L on each occurrence, identically or differently, denotes F, Cl, CN, SCN, SF₅ or straight-chain or branched, in each case optionally fluorinated, alkyl, alkoxy, alkylcarbonyl, alkoxycarbonyl, alkylcarbonyloxy or alkoxycarbonyloxy having 1 to 12 C atoms,
R⁰, R⁰⁰ each, independently of one another, denote H, F or straight-chain or branched alkyl having 1 to 12 C atoms, in which, in addition, one or more H atoms may be replaced by F,
M denotes -O-, -S-, -CH₂-, -CHY¹- or -CY¹Y²-, and
Y¹ and Y² each, independently of one another, have one of the meanings indicated above for R⁰ or denote Cl or CN.

13. LC medium according to one or more of Claims 1 to 12, **characterised in that** component (N) comprises particles which contain one or more polymerisable groups.

14. LC display comprising an LC cell having two substrates and at least two electrodes, where at least one substrate is transparent to light and at least one substrate has one or two electrodes, and a layer of an LC medium according to one or more of Claims 1 to 13 located between the substrates,
where component (N) is suitable for effecting homeotropic alignment of the LC medium with respect to the substrate surfaces.

15. LC display according to Claim 14, **characterised in that** the substrates have no alignment layers.

16. LC display according to Claim 14 or 15, **characterised in that** it is a VA display having interdigital electrodes arranged on one or both sides of the LC cell.

17. Process for the preparation of an LC medium according to one or more of Claims 1 to 13, **characterised in that** a low-molecular-weight liquid-crystalline component having positive dielectric anisotropy with a value Δε ≥ 1.5 and a component (N) comprising particles having a mass of at least 450 Da, where the particles have been functionalised by one or more organic polar anchor groups and the anchor groups contain one or more heteroatoms selected from the elements N, O, S and P, are mixed, and polymerisable compounds and/or assistants are optionally added.

## Revendications

1. Milieu LC comprenant un composant cristallin liquide de poids moléculaire faible présentant une anisotropie diélectrique positive avec une valeur Δε ≥ 1,5 et un composant (N) comprenant des particules présentant une masse d'au moins 450 Da, où les particules ont été fonctionnalisées par un ou plusieurs groupe(s) d'ancrage polaire(s) organique(s) et les groupes d'ancrage contiennent un ou plusieurs hétéro-atome(s) choisi(s) parmi les éléments N, O, S et P.

2. Milieu LC selon la revendication 1, **caractérisé en ce qu'**il comprend un composant polymérisable ou polymérisé, où le composant polymérisé peut être obtenu par polymérisation d'un composant polymérisable.

3. Milieu LC selon la revendication 1 ou 2, **caractérisé en ce que** le composant (N) est constitué par des particules dissoutes ou dispersées.

4. Milieu LC selon une ou plusieurs des revendications 1 à 3, **caractérisé en ce que** les particules du composant (N) présentent un rapport de forme dₘₐₓ/dₘᵢₙ d'au plus 3:1.

5. Milieu LC selon une ou plusieurs des revendications 1 à 4, **caractérisé en ce que** les particules du composant (N) sont des molécules organiques.

6. Milieu LC selon une ou plusieurs des revendications 1 à 5, **caractérisé en ce que** les particules du composant (N) sont des particules hybrides organiques/inorganiques.

7. Milieu LC selon une ou plusieurs des revendications 1 à 6, **caractérisé en ce que** le composant (N) comprend des composés silsesquioxane.

8. Milieu LC selon une ou plusieurs des revendications 1 à 7, **caractérisé en ce que** les particules du composant (N) ont été fonctionnalisées par un ou plusieurs groupe(s) d'ancrage contenant, en plus d'un squelette hydrocarbone, au moins un ou plusieurs hétéroatome(s) choisi(s) parmi les éléments N, O et S dans des éléments structurels choisis parmi -NH₂, -NH-, tert-N (amine tertiaire), =N-, -OH, -SH, -CN, -(CO)-, -O-, -S- et des combinaisons de deux ou plus de ces groupes.

9. Milieu LC selon une ou plusieurs des revendications 1 à 7, **caractérisé en ce que** la composant (N) a été fonctionnalisé par un groupe d'ancrage contenant un groupe de la sous-formule :
-Sp-[_{X}²-Z²-]ₖX¹ (A1)
dans laquelle, dans chaque cas de manière indépendante,
Sp représente un groupe d'espaceur ou une liaison simple via lequel/laquelle une connexion sur la particule est établie,
X¹ représente un groupe -NH₂, -NHR¹, -NR¹₂, -CN, -OR¹, -OH, -(CO)OH, ou un groupe de la formule : 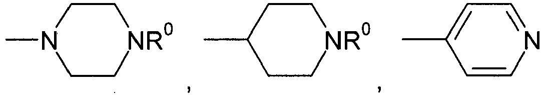 ou 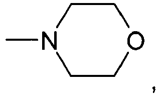
R⁰ représente H ou alkyle comportant 1 à 12 atome(s) de C,
X² représente, dans chaque cas de manière indépendante, -NH-, -NR¹-, -O- ou une liaison simple,
Z² représente, dans chaque cas de manière indépendante, un groupe alkylène comportant 1-15 atome(s) de C, des cycles carbocycliques comportant 5 ou 6 atomes de C, ou des combinaisons d'un ou de plusieurs cycle(s) et de groupes alkylène, et dans chacun d'eux, un ou plusieurs atome(s) d'hydrogène peut/peuvent être remplacé(s) par -OH, OR¹, -NH₂, -NHR¹-, -NR¹₂ ou halogène (de façon préférable F, Cl),
R¹ représente, dans chaque cas de manière indépendante, un radical alkyle halogéné ou non substitué comportant 1 à 15 atome(s) de C, où, en outre, un ou plusieurs groupe(s) CH₂ dans ce radical peut/peuvent chacun être remplacé(s), indépendamment les uns des autres, par -C≡C-, -CH=CH-, -(CO)O-, -O(CO)-, -(CO)- ou -O- de telle sorte que des atomes de O et de N ne soient pas liés directement les uns aux autres, et où les groupes R¹ peuvent être liés les uns aux autres pour former des systèmes de cycle, et
k représente 0 à 3.

10. Milieu LC selon une ou plusieurs des revendications 1 à 9, **caractérisé en ce que** les particules du composant (N) comportent chacune précisément un seul groupe d'ancrage.

11. Milieu LC selon une ou plusieurs des revendications 1 à 10, **caractérisé en ce qu'**il comprend les particules du composant (N) selon une concentration inférieure à 10% en poids.

12. Milieu LC selon une ou plusieurs des revendications à 11, **caractérisé en ce que** le composant polymérisable comprend un composé de la formule I :
P^{a}-(Sp^{a})ₛ₁-A²-(Z¹-A¹)ₙ-(Sp^{b})ₛ₂-P^{b}
dans laquelle les radicaux individuels présentent les significations qui suivent :
P^{a}, P^{b} représentent, chacun indépendamment de l'autre, un groupe polymérisable,
Sp^{a}, Sp^{b} représentent, pour chaque occurrence, de manière identique ou différente, un groupe d'espaceur,
s1, s2 représentent, chacun indépendamment de l'autre, 0 ou 1,
A¹, A² représentent, chacun indépendamment de l'autre, un radical choisi parmi les groupes qui suivent :
a) le groupe constitué par trans-1,4-cyclohexylène, 1,4-cyclo-hexénylène et 4,4'-bicyclohexylène, où, en outre, un ou plusieurs groupe(s) CH₂ non adjacents peut/peuvent être remplacé(s) par -O- et/ou -S- et où, en outre, un ou plusieurs atome(s) de H peut/peuvent être remplacé(s) par F,
b) le groupe constitué par 1,4-phénylène et 1,3-phénylène, où, en outre, un ou deux groupe(s) CH peut/peuvent être remplacé(s) par N et où, en outre, un ou plusieurs atome(s) de H peut/peuvent être remplacé(s) par L,
c) le groupe constitué par tétrahydropyran-2,5-diyle, 1,3-dioxane-2,5-diyle, tétrahydrofuran-2,5-diyle, cyclobutane-1,3-diyle, pipéridine-1,4-diyle, thiophène-2,5-diyle et sélénophène-2,5-diyle, dont chacun peut également être monosubstitué ou polysubstitué par L,
d) le groupe constitué par des radicaux polycycliques saturés, partiellement non saturés ou complètement non saturés, et en option substitués, comportant 5 à 20 atomes de C cycliques, dont un ou plusieurs peut/peuvent être, en outre, remplacé(s) par des hétéroatomes, de façon préférable choisis parmi le groupe constitué par bicyclo[1.1.1]pentane-1,3-diyle, bicyclo[2.2.2]octane-1,4-diyle, spiro[3.3]heptane-2,6-diyle, 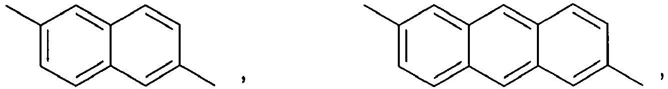 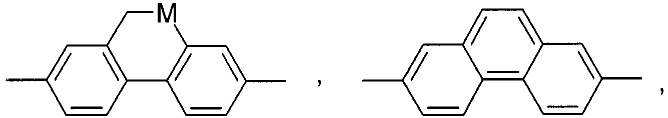 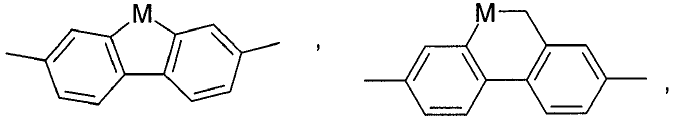 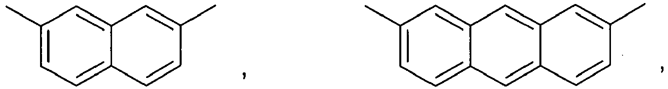 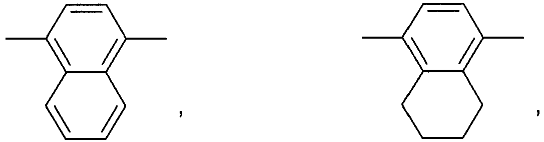 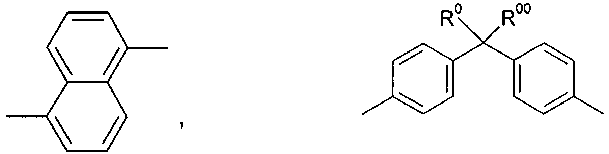 où, en outre, un ou plusieurs atome(s) de H dans ces radicaux peut/peuvent être remplacé(s) par L, et/ou une ou plusieurs liaison(s) double(s) peut/peuvent être remplacée(s) par des liaisons simples, et/ou un ou plusieurs groupe(s) CH peut/peuvent être remplacé(s) par N,
n représente 0, 1, 2 ou 3,
Z¹ représente, pour chaque cas indépendamment des autres, -CO-O-, -O-CO-, -CH₂O-, -OCH₂-, -CF₂O-, -OCF₂-, or -(CH₂)ₙ-, où n est 2, 3 ou 4, -O-, -CO-, -C(R^{y}R^{z})-, -CH₂CF₂-, -CF₂CF₂- ou une liaison simple,
L représente, pour chaque occurrence, de manière identique ou différente, F, Cl, CN, SCN, SF₅ ou alkyle, alcoxy, alkylcarbonyle, alcoxycarbonyle, alkylcarbonyloxy ou alcoxycarbonyloxy en chaîne droite ou ramifié, dans chaque cas en option fluoré, comportant 1 à 12 atome(s) de C,
R⁰, R⁰⁰ représentent, chacun indépendamment de l'autre, H, F ou alkyle en chaîne droite ou ramifié comportant 1 à 12 atome(s) de C, où, en outre, un ou plusieurs atome(s) de H peut/peuvent être remplacé(s) par F,
M représente -O-, -S-, -CH₂-, -CHY¹- ou -CY¹Y²-, et
Y¹ et Y² présentent, chacun indépendamment de l'autre, l'une des significations indiquées ci avant pour R⁰ ou représentent Cl ou CN.

13. Milieu LC selon une ou plusieurs des revendications 1 à 12, **caractérisé en ce que** le composant (N) comprend des particules qui contiennent un ou plusieurs groupe(s) polymérisable(s).

14. Affichage LC comprenant une cellule LC comportant deux substrats et au moins deux électrodes, où au moins un substrat est transparent vis-à-vis de la lumière et au moins un substrat comporte une ou deux électrode(s), et une couche en un milieu LC selon une ou plusieurs des revendications 1 à 13 située entre les substrats,
où le composant (N) est approprié pour réaliser un alignement homéotrope du milieu LC par rapport aux surfaces des substrats.

15. Affichage LC selon la revendication 14, **caractérisé en ce que** les substrats ne comportent pas de couches d'alignement.

16. Affichage LC selon la revendication 14 ou 15, **caractérisé en ce qu'**il s'agit d'un affichage VA comportant des électrodes interdigitées agencées sur un côté ou sur les deux côtés de la cellule LC.

17. Procédé pour la préparation d'un milieu LC selon une ou plusieurs des revendications 1 à 13, **caractérisé en ce qu'**un composant cristallin liquide de poids moléculaire faible présentant une anisotropie diélectrique positive avec une valeur Δε ≥ 1,5 et un composant (N) comprenant des particules présentant une masse d'au moins 450 Da, où les particules ont été fonctionnalisées par un ou plusieurs groupe(s) d'ancrage organique(s) polaire(s) et les groupes d'ancrage contiennent un ou plusieurs hétéroatome(s) choisi(s) parmi les éléments N, O, S et P, sont mélangés, et des composés polymérisables et/ou des assistants sont en option ajoutés.
